# EUROPÄISCHE PATENTSCHRIFT

(11) **EP 1 309 637 B1**
(45) Veröffentlichungstag und Bekanntmachung des Hinweises auf die Patenterteilung: **12.10.2005**
(21) Anmeldenummer: 01960653.2
(22) Anmeldetag: 13.08.2001
(51) Int. Cl.: C08F 283/00, C08F 290/06, C08G 18/63, C08G 18/67, C08G 18/08, C09D 175/14, C09D 175/16

(54) **POLYURETHANE UND PFROPFMISCHPOLYMERISATE AUF POLYURETHANBASIS SOWIE IHRE VERWENDUNG ZUR HERSTELLUNG VON BESCHICHTUNGSSTOFFEN, KLEBSTOFFEN UND DICHTUNGSMASSEN**
POLYURETHANES AND GRAFT COPOLYMERS BASED ON POLYURETHANE, AND THEIR USE FOR PRODUCING COATING MATERIALS, ADHESIVES, AND SEALING COMPOUNDS
POLYURETHANE ET POLYMERISATS MIXTES GREFFES A BASE DE POLYURETHANE ET LEUR UTILISATION POUR PRODUIRE DES MATIERES DE RECOUVREMENT, DES ADHESIFS ET DES MATIERES D'ETANCHEITE

(30) Priorität: 11.08.2000 DE 10039262
(43) Veröffentlichungstag der Anmeldung: 14.05.2003
(73) Patentinhaber: BASF Coatings AG, 48165 Münster (DE)
(72) Erfinder: SCHWARTE, Stephan, 48282 Emsdetten (DE); WEGNER, Egon, 48268 Greven (DE)
(74) Vertreter: Fitzner, Uwe
(86) Internationale Anmeldenummer: PCT/EP2001/009327
(87) Internationale Veröffentlichungsnummer: WO 2002/014394

(56) Entgegenhaltungen:
- EP-A- 0 608 021
- EP-A- 0 807 647
- WO-A-95/14721
- WO-A-98/54266

## Beschreibung

Die vorliegende Erfindung betrifft neue Polyurethane und neue Pfropfmischpolymerisate auf Polyurethanbasis. Außerdem betrifft die vorliegende Erfindung neue Verfahren zur Herstellung von Polyurethanen und Pfropfmischpolymerisaten auf Polyurethanbasis. Des weiteren betrifft die vorliegende Erfindung die Verwendung der neuen Polyurethane und der neuen Pfropfmischpolymerisate auf Polyurethanbasis zu Herstellung von Beschichtungsstoffen, Klebstoffen und Dichtungsmassen. Darüber hinaus betrifft die vorliegende Erfindung neue Beschichtungsstoffe, Klebstoffe und Dichtungsmassen, insbesondere wäßrige Beschichtungsstoffe, Klebstoffe und Dichtungsmassen. Nicht zuletzt betrifft die vorliegende Erfindung neue Beschichtungen, Klebschichten und Dichtungen, die aus den neuen, insbesondere wäßrigen, Beschichtungsstoffen, Klebstoffen und Dichtungsmassen erhältlich sind. Insbesondere betrifft die vorliegende Erfindung dekorative und/oder schützende ein- oder mehrschichtige Lackierungen, speziell farb- und/oder effektgebende Mehrschichtlackierungen.

Pfropfmischpolymerisate auf Polyurethanbasis sind bekannt. Üblicherweise werden sie durch die Pfropfmischpolymerisation olefinisch ungesättigter Monomere in der wäßrigen Dispersion eines hydrophilen oder hydrophoben Polyurethans, dessen Polymerkette terminale und/oder laterale, olefinisch ungesättigte Gruppen enthält, hergestellt. Gruppen dieser Art können
- über Maleinsäure oder Fumarsäure und/oder ihre Ester in die Polyurethankette,
- über Verbindungen mit zwei isocyanatreaktiven Gruppen und mindestens einer olefinisch ungesättigten Gruppe oder über Verbindungen mit zwei Isocanatgruppen und mindestens einer olefinisch ungesättigten Gruppe lateral zur Polyurethankette,
- über Verbindungen mit einer isocyanatreaktiven Gruppe und mindestens einer olefinisch ungesättigten Gruppe oder über Verbindungen mit einer Isocanatgruppe und mindestens einer olefinisch ungesättigten Gruppe terminal zur Polyurethankette oder
- über Anhydride alpha,beta-ungesättigter Carbonsäuren

eingebaut werden. Beispielhaft wird hierzu auf die Patentanmeldungen und Patentschriften DE 197 22 862 C 2, DE 196 45 761 A 1, EP 0 401 565 A 1, EP 0 522 420 A 1, EP 0 522 419 A 2, EP 0 755 946 A 1, EP 0 608 021 A 1, EP 0 708 788 A 1 oder EP 0 730 613 A 1 sowie die nicht vorveröffentlichten deutschen Patentanmeldungen DE 199 53 446.2 oder DE 199 53 203.6 verwiesen.

Außerdem werden in der nicht vorveröffentlichten deutschen Patentanmeldung DE 199 48 004.4-44 fremdvernetzende Polyurethane, die seitenständige, d. h. laterale, Ethenylarylengruppen als Pfropfstellen enthalten, sowie die entsprechenden fremdvernetzenden Pfropfmischpolymerisate beschrieben.

Des weiteren werden in der nicht vorveröffentlichten deutschen Patentanmeldung DE 199 53 445.4-44 die entsprechenden selbstvernetzenden Polyurethane und ihre selbstvernetzenden Pfropfmischpolymerisate beschrieben.

Im Rahmen der vorliegenden Erfindung ist unter der Eigenschaft hydrophil die konstitutionelle Eigenschaft eines Moleküls oder einer funktionellen Gruppe zu verstehen, in die wäßrige Phase einzudringen oder darin zu verbleiben. Demgemäß ist im Rahmen der vorliegenden Erfindung unter der Eigenschaft hydrophob die konstitutionelle Eigenschaft eines Moleküls oder einer funktionellen Gruppe zu verstehen, sich gegenüber Wasser exophil zu verhalten, d. h., sie zeigen die Tendenz, in Wasser nicht einzudringen oder die wäßrige Phase zu verlassen. Ergänzend wird auf Römpp Lexikon Lacke und Druckfarben, Georg Thieme Verlag, Stuttgart, New York, 1998, »Hydrophilie«, »Hydrophobie«, Seiten 294 und 295, verwiesen.

Im Rahmen der vorliegenden Erfindung bezeichnet der Begriff "selbstvernetzend" die Eigenschaft eines Bindemittels, mit sich selbst Vernetzungsreaktionen einzugehen. Voraussetzung hierfür ist, daß in den Polyurethanen und den Pfropfmischpolymerisaten komplementäre reaktive funktionelle Gruppen enthalten sind, die miteinander reagieren und so zu einer Vernetzung führen. Oder aber die Polyurethane und Pfropfmischpolymerisate enthalten reaktive funktionelle Gruppen die "mit sich selbst" reagieren. Als fremdvernetzend werden dagegen solche Polyurethane und Pfropfmischpolymerisate bezeichnet, worin die eine Art der komplementären reaktiven funktionellen Gruppen in den Polyurethanen und Pfropfmischpolymerisaten, und die andere Art in einem Härter oder Vernetzungsmittel vorliegen. Ergänzend wird hierzu auf Römpp Lexikon Lacke und Druckfarben, Georg Thieme Verlag, Stuttgart, New York, 1998, »Härtung«, Seiten 274 bis 276, insbesondere Seite 275, unten, verwiesen.

Die bekannten Pfropfmischpolymerisate auf Polyurethanbasis werden vor allem für die Herstellung von Wasserbasislacken verwendet. Die bekannten Wasserbasislacke dienen in erster Linie der Herstellung farb- und/oder effektgebender Basislackierungen in Mehrschichtlackierungen nach dem Naß-in-naß-Verfahren, wie sie beispielsweise in den vorstehend aufgeführten Patentschriften und Patentanmeldungen beschrieben werden.

Die Herstellung der bekannten Pfropfmischpolymerisate auf Polyurethanbasis kann indes Probleme bereiten.

So werden häufig laterale und/oder terminale Allylgruppen als Pfropfzentren eingebaut. Indes ist die Reaktivität der Allylgruppen vergleichsweise gering.

Verwendet man statt dessen die reaktiveren Acrylat- oder Methacrylatgruppen, kann es zum Gelieren der Polyurethane noch vor oder während der Pfropfmischpolymerisation kommen.

Nicht zuletzt kann sich in manchen Fällen der Gehalt der Polyurethane an olefinisch ungesättigten Gruppen als zu niedrig für eine vollständige Pfropfung erweisen, so daß ein großer Teil der aufzupfropfenden Monomere separate Homo- und/oder Copolymerisate neben dem Poylurethan bildet, die die anwendungstechnischen Eigenschaften der Pfropfmischpolymerisate und der hiermit hergestellten Beschichtungsstoffe, Klebstoffe und Dichtungsmassen beeinträchtigen können. Dieser Nachteil ist nicht ohne weiteres durch eine Erhöhung des Doppelbindungsanteils in den zu pfropfenden Polyurethanen zu beheben, weil hierdurch andere wichtige anwendungstechnische Eigenschaften der Polyurethane in Mitleidenschaft gezogen werden.

So kann es bei der Überlackierung mit Pulverslurry-Klarlacken zu einer Rißbildung in der Klarlackierung beim Einbrennen und/oder zu einer Enthaftung der Klarlackierung, insbesondere nach der Wasserstrahlprüfung, kommen. Des weiteren können auch Kocher auftreten.

Aufgabe der vorliegenden Erfindung ist es, neue hydrophile und hydrophobe olefinisch ungesättigte Polyurethane bereitzustellen, die nicht nur endständige, sondern auch seitenständige olefinisch ungesättigte Gruppen aufweisen, die sich gezielt und in einfacher Weise ohne die Gefahr der Produktschädigung herstellen lassen und die hervorragende Pfropfgrundlagen für olefinisch ungesättigte Monomere darstellen.

Eine weitere Aufgabe der vorliegenden Erfindung ist es, ein neues Verfahren zur Herstellung olefinisch ungesättigter Polyurethane zu finden, das gezielt in einfacher Weise ohne die Gefahr der Produktschädigung hydrophile oder hydrophobe Polyurethane mit seitenständigen und/oder endständigen olefinisch ungesättigten Gruppen liefert.

Noch eine weitere Aufgaben der vorliegenden Erfindung ist es, neue Pfropfmischpolymerisate in der Form von Primärdispersionen oder Sekundärdispersion zu finden, die sich in einfacher Weise gezielt und ohne die Gefahr der Produktschädigung herstellen lassen.

Dabei sollen die neue Pfropfmischpolymerisate physikalisch härtend, thermisch selbstvernetzend oder fremdvernetzend oder thermisch und mit aktinischer Strahlung (Dual Cure) härtbar sein.

Im Rahmen der vorliegenden Erfindung bedeutet der Begriff "physikalische Härtung" die Härtung eines Polyurethans oder eines Pfropfmischpolymerisats durch Verfilmung, wobei die Verknüpfung innerhalb einer Beschichtung über Schlaufenbildung der Polymermoleküle der Bindemittel (zu dem Begriff vgl. Römpp Lexikon Lacke und Druckfarben, Georg Thieme Verlag, Stuttgart, New York, 1998, »Bindemittel«, Seiten 73 und 74) erfolgt. Oder aber die Verfilmung erfolgt über die Koaleszenz von Polymerteilchenn (vgl. Römpp Lexikon Lacke und Druckfarben, Georg Thieme Verlag, Stuttgart, New York, 1998, »Härtung«, Seiten 274 und 275). Üblicherweise sind hierfür keine Vernetzungsmittel notwendig. Gegebenenfalls kann die physikalische Härtung durch Luftsauerstoff, Hitze oder durch Bestrahlen mit aktinischer Strahlung unterstützt werden.

Im Rahmen der vorliegenden Erfindung ist unter aktinischer Strahlung elektromagnetische Strahlung, wie sichtbares Licht, UV-Strahlung oder Röntgenstrahlung, insbesondere UV-Strahlung, und Korpuskularstrahlung wie Elektronenstrahlung zu verstehen.

Noch eine weitere Aufgabe der vorliegenden Erfindung ist es, neue wäßrige und nicht wäßrige, physikalisch härtende, thermisch selbstvernetzende oder fremdvernetzende oder thermisch und mit aktinischer Strahlung härtende Beschichtungsstoffe, Klebstoffe und Dichtungsmassen auf Polyurethanbasis mit sehr guten anwendungstechnischen Eigenschaften bereitzustellen. Insbesondere sollen neue Beschichtungsstoffe, insbesondere neue wäßrige Beschichtungsstoffe, speziell neue Wasserbasislacke, bereitgestellt werden, die die Nachteile des Standes der Technik nicht mehr länger aufweisen, sondern sich hervorragend für die Applikation nach dem Naß-in-Naß-Verfahren eignen. Hierbei soll es auch bei der Verwendung von Pulverklarlack-Slurries nicht zu einer Rißbildung (mud cracking) in den Klarlackierungen, Enthaftung der Klarlackierungen nach dem Wasserstrahltest und zu Kochern oder Nadelstichen kommen. Dabei sollen die neuen Beschichtungsstoffe eine sehr gute Lagerstabilität, hervorragende Applikationseigenschaften, wie einen sehr guten Verlauf und eine sehr geringe Läuferneigung auch bei hohen Schichtdicken, einen hervorragenden optischen Gesamteindruck sowie eine hohe Chemikalien- und Witterungsbeständigkeit aufweisen. Außerdem sollen die neuen Beschichtungsstoffe, Klebstoffe und Dichtungsmassen diese vorteilhaften Eigenschaften sowohl als Einkomponentensysteme als auch als Zwei- oder Mehrkomponentensysteme aufweisen.

Im Rahmen der vorliegenden Erfindung werden unter Zwei- oder Mehrkomponentensystemen Beschichtungsstoffe, Klebstoffe und Dichtungsmassen verstanden, deren Vernetzungsmittel aufgrund seiner hohen Reaktivität bis zur Applikation getrennt von übrigen Bestandteilen der Beschichtungsstoffe, Klebstoffe und Dichtungsmassen aufbewahrt werden muß.

Demgemäß wurde das neue hydrophile oder hydrophobe Polyurethan mit mindestens einer seitenständigen und/oder mindestens einer endständigen olefinisch ungesättigten Gruppe gefunden, worin
1. die seitenständige olefinisch ungesättigte Gruppe
   1.1 an eine cycloaliphatische Gruppe gebunden ist, die ein Glied der Polymerhauptkette darstellt, oder
   1.2 als Doppelbindung in einer cycloolfinischen Struktur vorliegt, die ein Glied der Polymerhauptkette darstellt, und
2. die endständige olefinisch ungesättigte Gruppe
   2.1 an eine cycloaliphatische Gruppe gebunden ist, die eine Endgruppe der Polymerhauptkette bildet, oder
   2.2 als Doppelbindung in einer cycloolefinischen Struktur vorliegt, die eine Endgruppe der Polymerhauptkette bildet.

Im folgenden wird das neue hydrophile oder hydrophobe Polyurethan mit mindestens einer seitenständigen und/oder mindestens einer endständigen olefinisch ungesättigten Gruppe als "erfindungsgemäßes Polyurethan" bezeichnet.

Des weiteren wurde das neue Pfropfmischpolymerisat gefunden, das herstellbar ist, indem man mindestens ein olefinisch ungesättigtes Monomer in der Gegenwart des erfindungsgemäßen Polyurethans (co)polymerisiert.

Im folgenden wird das neue Pfropfmischpolymerisat auf der Basis des erfindungsgemäßen Polyurethans als "erfindungsgemäßes Pfropfmischpolymerisat" bezeichnet.

Des weiteren wurden die neuen Klebstoffe, Dichtungsmassen und Beschichtungsstoffe, vor allem Lacke, insbesondere wäßrige Lacke, speziell Wasserbasislacke, gefunden, die mindestens ein erfindungsgemäßes Polyurethan und/oder mindestens ein erfindungsgemäßes Pfropfmischpolymerisat enthalten und im folgenden als erfindungsgemäße Klebstoffe, Dichtungsmassen und Beschichtungsstoffe bezeichnet werden.

Weitere erfindungsgemäße Gegenstände ergeben sich aus der Beschreibung.

Im Hinblick auf den Stand der Technik war es überraschend und für den Fachmann nicht vorhersehbar, daß die komplexe Aufgabe, die der vorliegenden Erfindung zugrunde lag, mit Hilfe der erfindungsgemäßen Polyurethane und/oder der erfindungsgemäßen Pfropfmischpolymerisate gelöst werden konnte. Insbesondere überraschte, daß die erfindungsgemäßen Polyurethane und die erfindungsgemäßen Pfropfmischpolymerisate in einfacher Weise gezielt hergestellt werden können, ohne daß es hierbei zu einer Schädigung der erfindungsgemäßen Produkte kommt. Des weiteren überraschte die außerordentlich breite Verwendbarkeit der erfindungsgemäßen Polyurethane und der erfindungsgemäßen Pfropfmischpolymerisate. Völlig unvorhersehbar war, daß insbesondere die erfindungsgemäßen Pfropfmischpolymerisate Wasserbasislacke liefern, die mit Pulverklarlack-Slurries nach dem Naß-in-naß-Verfahren zu hervorragenden farb- und/oder effektgebenden Mehrschichtlackierungen verarbeitet werden können, ohne daß es zu einer Rißbildung (mud cracking) in den Klarlackierungen, Enthaftung der Klarlackierungen nach dem Wasserstrahltest und zu Kochern oder Nadelstichen kommt.

Das erfindungsgemäße Polyurethan enthält mindestens eine seitenständige und/oder mindestens eine endständige olefinisch ungesättigte Gruppe. Mit anderen Worten: das erfindungsgemäße Polyurethan enthält mindestens eine seitenständige, mindestens eine endständige oder mindestens eine seitenständige und mindestens eine endständige olefinisch ungesättigte Gruppe. Hierbei bieten die erfindungsgemäßen Polyurethane, die mindestens eine seitenständige olefinisch ungesättigte Gruppe enthalten, besondere Vorteile und sind deshalb erfindungsgemäß besonders bevorzugt.

Das erfindungsgemäße Polyurethan ist im eingangs genannten Sinne hydrophil oder hydrophob. Hinsichtlich ihrer Verwendung zur Herstellung der erfindungsgemäßen Pfropfmischpolymerisate bieten die hydrophilen erfindungsgemäßen Polyurethane Vorteile und werden deshalb bevorzugt verwendet

Die seitenständige olefinisch ungesättigte Gruppe ist entweder an eine cycloaliphatische Gruppe gebunden, die ein Glied der Polymerhauptkette darstellt, oder sie liegt als Doppelbindung in einer cycloolefinischen Gruppe vor, die gleichfalls ein Glied der Polymerhauptkette darstellt.

Die endständige olefinisch ungesättigte Gruppe ist an eine cycloaliphatische Gruppe gebunden, die eine Endgruppe der Polymerhauptkette bildet, oder sie liegt als Doppelbindung in einer cycloolefinischen Gruppe vor, die gleichfalls eine Endgruppe der Polymerhauptkette bildet.

Erfindungsgemäß können mehrere olefinisch ungesättigte Gruppen an eine cycloaliphatische Gruppe gebunden sein. Es ist indes von Vorteil, wenn nur eine olefinisch ungesättigte Gruppe an eine cycloaliphatische Gruppe gebunden ist.

Als olefinisch ungesättigte Gruppen kommen im Grunde alle Gruppen in Betracht, die mindestens eine, insbesondere eine, Doppelbindung enthalten. Im Rahmen der vorliegenden Erfindung wird unter einer Doppelbindung einer Kohlenstoff-Kohlenstoff-Doppelbindung verstanden. Beispiele gut geeigneter olefinisch ungesättigter Gruppen sind (Meth)Acrylat-, Ethacrylat-, Crotonat-, Cinnamat-, Vinylether-, Vinylester-, Vinyl-, Dicyclopentadienyl-, Norbornenyl-, Isoprenyl-, Isopropenyl-, Allyl- und/oder Butenylgruppen; Dicyclopentadienyl-, Norbornenyl-, Isoprenyl-, Isopropenyl-, Allyl- oder Butenylethergruppen und/oder Dicyclopentadienyl-, Norbornenyl-, Isoprenyl-, Isopropenyl-, Allyl- und/oder Butenylestergruppen. Von diesen sind die Vinylgruppen besonders vorteilhaft und werden deshalb besonders bevorzugt verwendet.

Ebenso können mehrere Doppelbindungen in einer cycloolefinischen Gruppe vorliegen. Es ist es von Vorteil, wenn nur eine Doppelbindung pro cycloolefinischer Gruppe vorliegt.

In einem erfindungsgemäßen Polyurethan können sowohl die vorstehend beschriebenen cycloaliphatischen als auch die vorstehend beschriebenen cycloolefinischen Gruppen vorhanden sein.

Erfindungsgemäß sind die cycloaliphatischen Gruppen von Vorteil und werden deshalb bevorzugt verwendet.

Die cycloaliphatischen Gruppen können sich von beliebigen Cycloaliphaten ableiten. Erfindungsgemäß ist es von Vorteil, wenn sie sich von Cycloaliphaten mit 4 bis 12 Kohlenstoffatomen im Molekül ableiten.

Ebenso können sich die cycloolefinischen Gruppe von beliebigen Cycloolefinen ableiten. Erfindungsgemäß ist es von Vorteil, wenn sie sich von Cycloolefinen mit 4 bis 12 Kohlenstoffatomen im Molekül ableiten.

Beispiele gut geeigneter Cycloaliphaten sind Cyclobutan, Cyclopentan, Cyclohexan, Cycloheptan, Cycloctan, Norboman, Bicyclo[2.2.2]octan, Decalin, Hydroindan, Dicylcopenten, Tricyclodecan oder Adamantan, insbesondere aber Cyclohexan.

Beispiele gut geeigneter Cycloolefine sind Cyclopenten, Cyclohexen, Cyclohepten, Cycloocten, Norbornen, Bicyclo[2.2.2]octen oder Dicylclopenten.

Das erfindungsgemäße Polyurethan kann nach den unterschiedlichsten Methoden der Polymerchemie hergestellt werden. Es ist indes von Vorteil, das erfindungsgemäße Polyurethan herzustellen, indem man
(i) mindestens ein Polyurethanpräpolymer mit mindestens einer freien Isocyanatgruppe im Molekül mit
(ii) mindestens einem Cycloaliphaten mit mindestens einer, insbesondere einer, olefinisch ungesättigten Gruppe und mit mindestens zwei, insbesondere zwei, isocyanatreaktiven Gruppen im Molekül und/oder mit
(iii) mindestens einem Cycloolefin mit mindestens einer, insbesondere einer, Doppelbindung und mit mindestens zwei, insbesondere zwei, isocyanatreaktiven Gruppen im Molekül
umsetzt.

Wird bei der Umsetzung ein Überschuß an Isocyanatgruppen über die isocyanatreaktiven Gruppen angewandt, werden die Cycloaliphaten (ii) und/oder die Cycloolefine (iii) überwiegend oder ausschließlich in die Polymerhauptkette eingebaut. Wird dagegen ein Überschuß an isocyanatreaktiven Gruppen über die Isocyanatgruppen angewandt, werden die Cycloaliphaten (ii) und/oder die Cycloolefine (iii) überwiegend oder ausschließlich zu Endgruppen umgewandelt. Der Fachmann kann daher die Umsetzung leicht so steuern, daß er erfindungsgemäße Polyurethane mit den gewünschten Strukturen erhält.

Die Cycloaliphaten (ii) oder die Cycloolefine (iii) enthalten mindestens zwei isocyanatreaktive Gruppen. D. h., sie können zwei, drei, vier oder mehr isocyanatreaktive Gruppen im Molekül enthalten. Es können auch Gemische von Cycloaliphaten (ii) und/oder Cycloolefinen (iii) verwendet werden, die jeweils eine unterschiedliche Anzahl von isocyanatreaktiven Gruppen im Molekül aufweisen. So können beispielsweise Gemische aus Cycloaliphaten (ii) und/oder Cycloolefinen (iii) mit zwei und Cycloaliphaten (ii) und/oder Cycloolefinen (iii) mit drei isocyanatreaktive Gruppen im Molekül verwendet werden. Dadurch können verzweigte erfindungsgemäße Polyurethane in einfacher Weise hergestellt werden. Hierbei ist es vorteilhaft, die höherfunktionelle Verbindungen (ii) und/oder (iii) in untergeordneten Mengen einzusetzen, um ein Gelieren der Reaktionsmischung vermeiden. In den allermeisten Fällen werden indes nur bifunktionelle Cycloaliphaten (ii) und/oder Cycloolefine (iii) eingesetzt.

Beispiele geeigneter isocyanatreaktiver Gruppen sind und Hydroxyl-, Thiol- und/oder primäre und/oder sekundäre Aminogruppen. Erfindungsgemäß sind Hydroxylgruppen von Vorteil und werden deshalb bevorzugt verwendet.

Beispiele geeigneter olefinisch ungesättigter Gruppen für die Cycloaliphaten (ii) sind die vorstehend beschriebenen, von denen die Vinylgruppen besonders bevorzugt verwendet wird.

Beispiele gut geeigneter Cycloaliphaten (ii) sind die stellungsisomeren vinylsubstituierten Polyhydroxyderivate, insbesondere die Dihydroxyderivate, von Cyclobutan, Cyclopentan, Cyclohexan, Cycloheptan, Cycloctan, Norbornan, Bicyclo[2.2.2]octan, Decalin, Hydroindan, Dicylcopentan, Tricyclodecan oder Adamantan.

Beispiele gut geeigneter Cycloolefine (iii) sind die stellungsisomeren Polyhydroxyderivate, insbesondere die Dihydroxyderivate, von Cyclopenten, Cyclohexen, Cyclohepten, Cycloocten, Norbornen, Bicyclo[2.2.2]octen oder Dicylclopenten.

Erfindungsgemäß sind die stellungsisomeren Vinylcyclohexandiole (ii) 1-Vinylcyclohexan-2,6-, -3,6-, -4,6-, -2,3-, -3,4- und/oder -3,5-diol ganz besonders vorteilhaft und werden deshalb ganz besonders bevorzugt verwendet. Die stellungsisomeren Vinylcyclohexandiole (ii) sind übliche und bekannte Verbindungen und fallen als Gemische bei technischen Synthesen an. Im folgenden werden sie der Kürze halber als "Vinylcyclohexandiol" bezeichnet.

Das Polyurethanpräpolymer (i) ist linear, verzweigt oder kammartig, insbesondere aber linear, aufgebaut. Hierbei enthält das lineare Polyurethanpräpolymer (i) vorzugsweise zwei freie Isocyanatgruppen, insbesondere zwei endständige freie Isocyanatgruppen. Die verzweigten oder kammartig aufgebauten Polyurethanpräpolymere (i) enthalten vorzugsweise mindestens zwei, insbesondere mehr als zwei freie Isocyanatgruppen, wobei endständige freie Isocyanatgruppen bevorzugt sind.

Methodisch gesehen weist die Herstellung der erfindungsgemäß zu verwendenden Polyurethanpräpolymere (i) keine Besonderheiten auf, sondern erfolgt beispielsweise wie in der Patentschrift DE 197 22 862 C 1 oder den Patentanmeldungen DE 196 45 761 A 1, EP 0 522 419 A 1 oder EP 0 522 420 A 1 beschrieben, durch Umsetzung eines Polyols, insbesondere eines Diols, mit mindestens einem Polyisocyanat, insbesondere einem Diisocyanat, wobei die Isocyanatkomponente im molaren Überschuß angewandt wird.

Vorzugsweise werden für die Herstellung der Polyurethanpräpolymere (i) Diisocyanate sowie gegebenenfalls in untergeordneter Mengen Polyisocyanate zur Einführung von Verzweigungen verwendet. Im Rahmen der vorliegenden Erfindung sind unter untergeordneten Mengen Mengen zu verstehen, die kein Gelieren der Polyurethanpräpolymere (i) bei ihrer Herstellung bewirken. Letzteres kann auch noch durch die Mitverwendung geringer Mengen an Monoisocyanaten verhindert werden.

Beispiele für geeignete Düsocyanate sind Isophorondüsocyanat (= 5-Isocyanato-1-isocyanatomethyl-1,3,3-trimethyl-cyclohexan), 5-Isocyanato-1-(2-isocyanatoeth-1-yl)-1,3,3-trimethyl-cyclohexan, 5-Isocyanato-1-(3-isocyanatoprop-1-yl)-1,3,3-trimethyl-cyclohexan, 5-Isocyanato-(4-isocyanatobut-1-yl)-1,3,3-trimethyl-cyclohexan, 1-Isocyanato-2-(3-isocyanatoprop-1-yl)-cyclohexan, 1-Isocyanato-2-(3-isocyanatoeth-1-yl)cyclohexan, 1-Isocyanato-2-(4-isocyanatobut-1-yl)-cyclohexan, 1,2-Diisocyanatocyclobutan, 1,3-Diisocyanatocyclobutan, 1,2-Diisocyanatocyclopentan, 1,3-Diisocyanatocyclopentan, 1,2-Diisocyanatocyclohexan, 1,3-Düsocyanatocyclohexan, 1,4- Diisocyanatocyclonexan, Dicyclohexylmethan-2,4'-diisocyanat, Trimethylendiisocyanat, Tetramethylendiisocyanat, Pentamethylendiisocyanat, Hexamethylendiisocyanat, Ethylethylendiisocyanat, Trimethylhexandiisocyanat, Heptanmethylendiisocyanat oder Düsocyanate, abgeleitet von Dimerfettsäuren, wie sie unter der Handelsbezeichnung DDI 1410 von der Firma Henkel vertrieben und in den Patentschriften WO 97/49745 und WO 97/49747 beschrieben werden, insbesondere 2-Heptyl-3,4-bis(9-isocyanatononyl)-1-pentyl-cyclohexan, oder 1,2-, 1,4- oder 1,3-Bis(isocyanatomethyl)cyclohexan, 1,2-, 1,4- oder 1,3-Bis(2-isocyanatoeth-1-yl)cyclohexan, 1,3-Bis(3-isocyanatoprop-1-yl)cyclohexan, 1,2-, 1,4- oder 1,3-Bis(4-isocyanatobut-1-yl)cyclohexan, flüssiges Bis(4-isocyanatocyclohexyl)methan eines trans/trans-Gehalts von bis zu 30 Gew.-%, vorzugsweise 25 Gew.-% und insbesondere 20 Gew.-%, wie es den Patentschriften DE 44 14 032 A 1, GB 1220717 A, DE 16 18 795 A 1 oder DE 17 93 785 A 1beschrieben wird; Toluylendiisocyanat, Xylylendiisocyanat, Bisphenylendiisocyanat, Naphthylendiisocyanat oder Diphenylmethandiisocyanat.

Beispiele geeigneter Polyisocyanate sind die Isocyanurate der vorstehend beschriebenen Düsocyanate.

Beispiele gut geeigneter Monoisocyanate sind Phenylisocyanat, Cyclohexylisocyanat oder Stearylisocyanat.

Für die Herstellung der Polyurethanpräpolymere (i) werden des weiteren
- gesättigte und ungesättigte höhermolekulare und niedermolekulare Polyole, insbesondere Diole und in untergeordneten Mengen Triole zur Einführung von Verzweigungen, sowie gegebenenfalls
- Verbindungen, durch welche hydrophile funktionelle Gruppen eingeführt werden,
- Polyamine und
- Aminolakohole
verwendet.

Beispiele geeigneter Polyole sind gesättigte oder olefinisch ungesättigte Polyesterpolyole, welche durch Umsetzung von
- gegebenenfalls sulfonierten gesättigen und/oder ungesättigten Polycarbonsäuren oder deren veresterungsfähigen Derivaten, gegebenenfalls zusammen mit Monocarbonsäuren, sowie
- gesättigten und/oder ungesättigten Polyolen, gegebenenfalls zusammen mit Monoolen,
hergestellt werden.

Beispiele für geeigente Polycarbonsäuren sind aromatische, aliphatische und cycloaliphatische Polycarbonsäuren. Bevorzugt werden aromatische und/oder aliphatische Polycarbonsäuren eingesetzt.

Beispiele für geeignete aromatische Polycarbonsäuren sind Phthalsäure, Isophthalsäure, Terephthalsäure, Phthalsäure-, Isophthalsäure- oder Terephthalsäuremonosulfonat, oder Halogenphthalsäuren, wie Tetrachlor- bzw. Tetrabromphthalsäure, von denen Isophthalsäure, vorteilhaft ist und deshalb bevorzugt verwendet wird.

Beispiele für geeignete acyclische aliphatische oder ungesättigte Polycarbonsäuren sind Oxalsäure, Malonsäure, Bernsteinsäure, Glutarsäure, Adipinsäure, Pimelinsäure, Korksäure, Azelainsäure, Sebacinsäure, Undecandicarbonsäure oder Dodecandicarbonsäure oder Maleinsäure, Fumarsäure oder Itaconsäure von denen Adipinsäure, Glutarsäure, Azelainsäure, Sebacinsäure, Dimerfettsäuren und Maleinsäure vorteilhaft sind und deshalb bevorzugt verwendet werden.

Beispiele für geeignete cycloaliphatische und cyclische ungesättigte Polycarbonsäuren sind 1,2-Cyclobutandicarbonsäure, 1,3-Cyclobutandicarbonsäure, 1,2-Cyclopentandicarbonsäure, 1,3-Cyclopentandicarbonsäure, Hexahydrophthalsäure, 1,3-Cyclohexandicarbonsäure, 1,4-Cyclohexandicarbonsäure, 4-Methylhexahydrophthalsäure, Tricyclodecandicarbonsäure, Tetrahydrophthalsäure oder 4-Methyltetrahydrophthalsäure. Diese Dicarbonsäuren können sowohl in ihrer cis- als auch in ihrer trans-Form sowie als Gemisch beider Formen eingesetzt werden.

Weitere Beispiele für geeignete Polycarbonsäuren sind polymere Fettsäuren, insbesondere solche mit einem Dimerengehalt von mehr als 90 Gew.-%, die auch als Dimerfettsäuren bezeichnet werden.

Geeignet sind auch die veresterungsfähigen Derivate der obengenannten Polycarbonsäuren, wie z.B. deren ein- oder mehrwertige Ester mit aliphatischen Alkoholen mit 1 bis 4 Kohlenstoffatomen oder Hydroxyalkoholen mit 1 bis 4 Kohlenstoffatomen. Außerdem können auch die Anhydride der obengenannten Polycarbonsäuren eingesetzt werden, sofern sie existieren.

Gegebenenfalls können zusammen mit den Polycarbonsäuren auch Monocarbonsäuren eingesetzt werden, wie beispielsweise Benzoesäure, tert.-Butylbenzoesäure, Laurinsäure, Isononansäure, Fettsäuren natürlich vorkommender Öle, Acrylsäure, Methacrylsäure, Ethacrylsäure oder Crotonsäure. Bevorzugt wird als Monocarbonsäure Isononansäure eingesetzt.

Beispiele geeigneter Polyole sind Diole und Triole, insbesondere Diole. Üblicherweise werden Triole neben den Diolen in untergeordneten Mengen verwendet, um Verzweigungen in die Polyesterpolyole einzuführen. Im Rahmen der vorliegenden Erfindung sind unter untergeordneten Mengen Mengen zu verstehen, die kein Gelieren der Polyesterpolyole bei ihrer Herstellung bewirken.

Geeignete Diole sind Ethylenglykol, 1,2- oder 1,3-Propandiol, 1,2-, 1,3- oder 1,4-Butandiol, 1,2-, 1,3-, 1,4- oder 1,5-Pentandiol, 1,2-, 1,3-, 1,4-, 1,5- oder 1,6-Hexandiol, Hydroxypivalinsäureneopentylester, Neopentylglykol, Diethylenglykol, 1,2-, 1,3- oder 1,4-Cyclohexandiol, 1,2-, 1,3- oder 1,4-Cyclohexandimethanol, Trimethylpentandiol, Ethylbutylpropandiol oder die stellungsisomeren Diethyloctandiole. Diese Diole können auch als solche für die Herstellung der erfindungsgemäß zu verwendenden Polyurethane (A) eingesetzt werden.

Weitere Beispiele geeigneter Diole sind Diole der Formel I oder II: 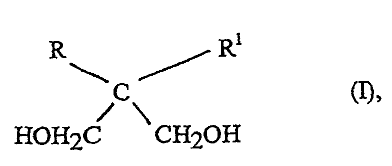 in der R und R¹ jeweils einen gleichen oder verschiedenen Rest darstellen und für einen Alkylrest mit 1 bis 18 C-Atomen, einen Arylrest oder einen cycloaliphatischen Rest stehen, mit der Maßgabe, daß R und/oder R¹ nicht Methyl sein darf; 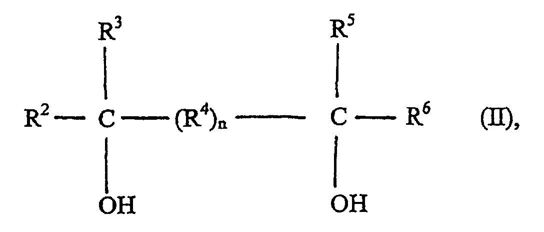 in der R², R³, R⁴ und R⁶ jeweils gleiche oder verschiedene Reste darstellen und für einen Alkylrest mit 1 bis 6 C-Atomen, einen Cycloalkylrest oder einen Arylrest stehen und R⁴ einen Alkandiylrest mit 1 bis 6 C-Atomen, einen Arylenrest oder einen ungesättigten Alkendiylrest mit 1 bis 6 C-Atomen darstellt, und n entweder 0 oder 1 ist.

Als Diole I der allgemeinen Formel I sind alle Propandiole geeignet, bei denen entweder R oder R¹ oder R und R¹ nicht gleich Methyl ist, wie beispielsweise 2-Butyl-2-ethylpropandiol-1,3, 2-Butyl-2-methylpropandiol-1,3, 2-Phenyl-2-methylpropan-diol-1,3, 2-Propyl-2-ethylpropandiol-1,3, 2-Di-tert.-butylpropandiol-1,3, 2-Butyl-2-propylpropandiol-1,3, 1-Dihydroxymethyl-bicyclo[2.2.1]heptan, 2,2-Diethylpro-pandiol-1,3, 2,2-Dipropylpropandiol-1,3 oder 2-Cyclo-hexyl-2-methylpropandiol-1,3 und andere.

Als Diole II der allgemeinen Formel II können beispielsweise 2,5-Dimethylhexandiol-2,5, 2,5-Diethylhexandiol-2,5, 2-Ethyl-5-methylhexandiol-2,5, 2,4-Dimethylpentandiol-2,4, 2,3-Dimethylbutandiol-2,3, 1,4-(2'-Hydroxypropyl)-benzol und 1,3-(2'-Hydroxypropyl)-benzol eingesetzt werden.

Von diesen Diolen sind Hexandiol und Neopentylglykol besonders vorteilhaft und werden deshalb besonders bevorzugt verwendet.

Die vorstehend genannten Diole können auch als solche für die Herstellung der Polyurethanpräpolymere (i) eingesetzt werden.

Beispiele geeigneter Triole sind Trimethylolethan, Trimethylolpropan oder Glycerin, insbesondere Trimethylolpropan.

Die vorstehend genannten Triole können auch als solche für die Herstellung der Polyurethanpräpolymere (i) eingesetzt werden (vgl. die EP 0 339 433 A 1).

Gegebenenfalls können untergeordnete Mengen von Monoolen mit verwendet werden. Beispiele geeigneter Monoole sind Alkohole oder Phenole wie Ethanol, Propanol, n-Butanol, sec.- Butanol, tert.-Butanol, Amylalkohole, Hexanole, Fettalkohole, Allylalkohol oder Phenol.

Die Herstellung der Polyesterpolyole kann in Gegenwart geringer Mengen eines geeigneten Lösemittels als Schleppmittel durchgeführt werden. Als Schleppmittel werden z. B. aromatische Kohlenwasserstoffe, wie insbesondere Xylol und (cyclo)aliphatische Kohlenwasserstoffe, z. B. Cyclohexan oder Methylcyclohexan, eingesetzt.

Weitere Beispiele geeigneter Polyole sind Polyesterdiole, die durch Umsetzung eines Lactons mit einem Diol erhalten werden. Sie zeichnen sich durch die Gegenwart von entständigen Hydroxylgruppen und wiederkehrenden Polyesteranteilen der Formel -(-CO-(CHR⁷)ₘ- CH₂-O-)- aus. Hierbei ist der Index m bevorzugt 4 bis 6 und der Substitutent R⁷ = Wasserstoff, ein Alkyl-, Cycloalkyl- oder Alkoxy-Rest. Kein Substituent enthält mehr als 12 Kohlenstoffatome. Die gesamte Anzahl der Kohlenstoffatome im Substituenten übersteigt 12 pro Lactonring nicht. Beispiele hierfür sind Hydroxycapronsäure, Hydroxybuttersäure, Hydroxydecansäure und/oder Hydroxystearinsäure.

Für die Herstellung der Polyesterdiole wird das unsubstituierte ###-Caprolacton, bei dem m den Wert 4 hat und alle R⁷-Substituenten Wasserstoff sind, bevorzugt. Die Umsetzung mit Lacton wird durch niedermolekulare Polyole wie Ethylenglykol, 1,3-Propandiol, 1,4-Butandiol oder Dimethylolcyclohexan gestartet. Es können jedoch auch andere Reaktionskomponenten, wie Ethylendiamin, Alkyldialkanolamine oder auch Harnstoff mit Caprolacton umgesetzt werden. Als höhermolekulare Diole eignen sich auch Polylactamdiole, die durch Reaktion von beispielsweise ###-Caprolactam mit niedermolekularen Diolen hergestellt werden.

Weitere Beispiele geeigneter Polyole sind Polyetherpolyole, insbesondere mit einem zahlenmittleren Molekulargewicht von 400 bis 5000, insbesondere von 400 bis 3000. Gut geeignete Polyetherdiole sind z.B. Polyetherdiole der allgemeinen Formel H-(-O-(CHR⁸)ₒ-)ₚOH, wobei der Substituent R⁸ = Wasserstoff oder ein niedriger, gegebenenfalls substituierter Alkylrest ist, der Index o = 2 bis 6, bevorzugt 3 bis 4, und der Index p = 2 bis 100, bevorzugt 5 bis 50, ist. Als besonders gut geeignete Beispiele werden lineare oder verzweigte Polyetherdiole wie Poly(oxyethylen)glykole, Poly(oxypropylen)glykole und Poly(oxybutylen)glykole genannt.

Durch die Polyetherdiole werden können nichtionische hydrophile funktionelle Gruppen in die Hauptkette(n) der Polyurethanpräpolymeren (i) eingeführt werden.

Hydrophile Polyurethanpräpolymere (i) enthalten entweder
- hydrophile funktionelle Gruppen, die durch Neutralisationsmittel und/oder Quaternisierungsmittel in Kationen überführt werden können, und/oder kationische Gruppen,
oder
- funktionelle Gruppen, die durch Neutralisationsmittel in Anionen überführt werden können, und/oder anionische Gruppen,
und/oder
- nichtionische hydrophile Gruppen.

Beispiele geeigneter erfindungsgemäß zu verwendender funktioneller Gruppen, die durch Neutralisationsmittel und/oder Quaternisierungsmittel in Kationen überführt werden können, sind primäre, sekundäre oder tertiäre Aminogruppen, sekundäre Sulfidgruppen oder tertiäre Phoshingruppen, insbesondere tertiäre Aminogruppen oder sekundäre Sulfidgruppen.

Beispiele geeigneter erfindungsgemäß zu verwendender kationischer Gruppen sind primäre, sekundäre, tertiäre oder quaternäre Ammoniumgruppen, tertiäre Sulfoniumgruppen oder quaternäre Phosphoniumgruppen, vorzugsweise quaternäre Ammoniumgruppen oder tertiäre Sulfoniumgruppen, insbesondere aber tertiäre Ammoniumgruppen.

Beispiele geeigneter erfindungsgemäß zu verwendender funktioneller Gruppen, die durch Neutralisationsmittel in Anionen überführt werden können, sind Carbonsäure-, Sulfonsäure- oder Phosphonsäuregruppen, insbesondere Carbonsäuregruppen.

Beispiele geeigneter erfindungsgemäß zu verwendender anionischer Gruppen sind Carboxylat-, Sulfonat- oder Phosphonatgruppen, insbesondere Carboxylatgruppen.

Beispiele geeigneter Neutralisationsmittel für in Kationen umwandelbare funktionelle Gruppen sind anorganische und organische Säuren wie Schwefelsäure, Salzsäure, Phosphorsäure, Ameisensäure, Essigsäure, Milchsäure, Dimethylolpropionsäure oder Zitronensäure.

Beispiele für geeignete Neutralisationsmittel für in Anionen umwandelbare funktionelle Gruppen sind Ammoniak oder Amine, wie z.B. Trimethylamin, Triethylamin, Tributylamin, Dimethylanilin, Diethylanilin, Triphenylamin, Dimethylethanolamin, Diethylethanolamin, Methyldiethanolamin, 2-Aminomethylpropanol, Dimethylisopropylamin, Dimethylisopropanolamin oder Triethanolamin. Die Neutralisation kann in organischer Phase oder in wäßriger Phase erfolgen. Bevorzugt wird als Neutralisationsmittel Dimethylethanolamin und/oder Triethylamin eingesetzt.

Die Einführung von hydrophilen funktionellen (potentiellen) kationischen Gruppen in die Polyurethanpräpolymere (i) erfolgt über den Einbau von Verbindungen, die mindestens eine, insbesondere zwei, gegenüber Isocyanatgruppen reaktive und mindestens eine zur Kationenbildung befähigte Gruppe im Molekül enthalten; die einzusetzende Menge kann aus der angestrebten Aminzahl berechnet werden.

Geeignete isocyanatreaktive funktionelle Gruppen sind die vorstehend beschriebenen.
Beispiele geeigneter Verbindungen dieser Art sind 2,2-Dimethylolethyl- oder -propylamin, die mit einem Keton blockiert sind, wobei die resultierende Ketoximgruppe vor der Bildung der kationischen Gruppe wieder hydrolysiert wird, oder N,N-Dimethyl-, N,N-Diethyl- oder N-Methyl-N-ethyl-2,2-dimethylolethyl- oder -propylamin.

Die Einführung von hydrophilen funktionellen (potentiell) anionischen Gruppen in die Polyurethanpräpolymere (i) erfolgt über den Einbau von Verbindungen, die mindestens eine gegenüber Isocyanatgruppen reaktive und mindestens eine zur Anionenbildung befähigte Gruppe im Molekül enthalten; die einzusetzende Menge kann aus der angestrebten Säurezahl berechnet werden.

Beispiele geeigneter Verbindungen dieser Art sind solche, die zwei isocyanatreaktive Gruppen im Molekül enthalten. Geeignete isocyanatreaktive Gruppen sind auch hier die vorstehend beschriebenen. Demnach können beispielsweise Alkansäuren mit zwei Substituenten am ###-ständigen Kohlenstoffatom eingesetzt werden. Der Substituent kann eine Hydroxylgruppe, eine Alkylgruppe oder bevorzugt eine Alkylolgruppe sein. Diese Alkansäuren haben mindestens eine, im allgemeinen 1 bis 3 Carboxylgruppen im Molekül. Sie haben 2 bis etwa 25, vorzugsweise 3 bis 10 Kohlenstoffatome. Beispiele geeigneter Alkansäuren sind Dihydroxypropionsäure, Dihydroxybernsteinsäure und Dihydroxybenzoesäure. Eine besonders bevorzugte Gruppe von Alkansäuren sind die ###,###-Dimethylolalkansäuren der allgemeinen Formel R⁹-C(CH₂OH)₂COOH, wobei R⁹ für ein Wasserstoffatom oder eine Alkylgruppe mit bis zu etwa 20 Kohlenstoffatomen steht. Beispiele besonders gut geeigneter Alkansäuren sind 2,2-Dimethylolessigsäure, 2,2-Dimethylolpropionsäure, 2,2-Dimethylolbuttersäure und 2,2-Dimenthylolpentansäure. Die bevorzugte Dihydroxyalkansäure ist 2,2-Dimethylolpropionsäure. Aminogruppenhaltige Verbindungen sind beispielsweise ###,###-Diaminovaleriansäure, 3,4-Diaminobenzoesäure, 2,4-Diaminotoluolsulfonsäure und 2,4-Diaminodiphenylethersulfonsäure.

Hydrophile funktionelle nichtionische Poly(oxyalkylen)gruppen können als laterale oder endständige Gruppen in die Polyurethanmoleküle eingeführt werden. Hierfür können neben den vorstehend beschriebenen Polyetherdiolen beispielsweise Alkoxypoly(oxyalkylen)alkohole mit der allgemeinen Formel R¹⁰O-(-CH₂-CHR¹¹-O-)ᵣ H in der R¹⁰ für einen Alkylrest mit 1 bis 6 Kohlenstoffatomen, R¹¹ für ein Wasserstoffatom oder einen Alkylrest mit 1 bis 6 Kohlenstoffatomen und der Index r für eine Zahl zwischen 20 und 75 steht, eingesetzt werden. (vgl. die Patentschriften EP 0 354 261 A 1 oder EP 0 424 705 A 1).

Die Auswahl der hydophilen funktionellen Gruppen ist so zu treffen, daß keine störenden Reaktionen, wie etwa Salzbildung oder Vernetzung mit den funktionellen Gruppen, die gegebenenfalls in den übrigen Bestandteilen des erfindungsgemäßen Polyurethans, der erfindungsgemäßen Pfropfmischpolymerisate, des erfindungsgemäßen Beschichtungsstoffs, der erfindungsgemäßen Dichtungsmasse oder des erfindungsgemäßen Klebstoffs vorliegen, möglich sind. Der Fachmann kann daher die Auswahl in einfacher Weise anhand seines Fachwissens treffen.

Von diesen hydrophilen funktionellen (potentiell) ionischen Gruppen und den hydrophilen funktionellen nichtionischen Gruppen sind die (potentiell) anionischen Gruppen vorteilhaft und werden deshalb besonders bevorzugt verwendet.

Zur Herstellung der hydrophilen und der hydrophoben Polyurethanpräpolymeren (i) können Polyamine und Aminoalkohole verwendet werden, die eine Molekulargewichtserhöhung der Polyurethanpräpolymeren (i) bewirken. Wesentlich ist hierbei, daß die Polyamine und Aminoalkohole in einer Menge angewandt werden, daß noch freie Isocyanatgruppen im Molekül verbleiben.

Beispiele geeigneter Polyamine weisen mindestens zwei primäre und/oder sekundäre Aminogruppen auf. Polyamine sind im wesentlichen Alkylenpolyamine mit 1 bis 40 Kohlenstoffatomen, vorzugsweise etwa 2 bis 15 Kohlenstoffatomen. Sie können Substituenten tragen, die keine mit Isocyanat-Gruppen reaktionsfähige Wasserstoffatome haben. Beispiele sind Polyamine mit linearer oder verzweigter aliphatischer, cycloaliphatischer oder aromatischer Struktur und wenigstens zwei primären Aminogruppen.

Als Diamine sind zu nennen Hydrazin, Ethylendiamin, Propylendiamin, 1,4-Butylendiamin, Piperazin, 1,4-Cyclohexyldimethylamin, Hexamethylendiamin-1,6, Trimethylhexamethylendiamin, Menthandiamin, Isophorondiamin, 4,4'-Diaminodicyclohexylmethan und Aminoethylenothanolamin. Bevorzugte Diamine sind Hydrazin, Alkyl- oder Cycloalkyldiamine wie Propylendiamin und 1-Amino-3-aminomethyl-3,5,5-trimethylcyclohexan.

Es können auch Polyamine eingesetzt werden, die mehr als zwei Aminogruppen im Molekül enthalten. In diesen Fällen ist jedoch - z.B. durch Mitverwendung von Monoaminen - darauf zu achten, daß keine vernetzten Polyurethanharze erhalten werden. Solche brauchbaren Polyamine sind Diethylentriamin, Triethylentetramin, Dipropylendiamin und Dibutylentriamin. Als Beispiel für ein Monoamin ist Ethylhexylamin zu nennen (vgl. die Patentschrift EP 0 089 497 B 1).

Beispiele geeigneter Aminoalkohole sind Ethanolamin oder Diethanolamin.

Darüber hinaus können für die Herstellung der hydrophilen und hydrophoben Polyurethanpräpolymeren (i) übliche und bekannte Verbindungen verwendet werden, durch die olefinisch ungesättigte Gruppen eingeführt werden. Bekanntermaßen enthalten solche Verbindungen mindestens zwei gegenüber Isocyanatgruppen reaktive funktionelle Gruppen, insbesondere Hydroxylgruppen, und mindestens eine olefinisch ungesättigte Gruppe. Beispiele geeigneter Verbindungen dieser Art sind aus dem Patent DE 197 22 862 C 1 oder den Patentanmeldungen DE 196 45 761 A 1, EP 0 522 419 A 1 oder EP 0 522 420 A 1 bekannt. Sofern verwendet, werden sie in untergeordneten Mengen eingesetzt, sodaß das Eigenschaftsprofil der erfindungsgemäßen Polyurethane durch die vorstehend beschriebenen erfindungsgemäß zu verwendenden olefinisch ungesättigten Gruppen bestimmt wird.

Die Herstellung der Polyurethanpräpolymere (i) aus den vorstehend beschriebenen Bestandteilen weist keine methodischen Besonderheiten auf, sondern erfolgt nach den üblichen und bekannten Methoden der Polyurethanchemie, wie sie beispielsweise aus den vorstehend aufgeführten Schriften bekannt sind.

Die Herstellung der erfindungsgemäßen Polyurethane aus den vorstehend beschriebenen Polyurethanpräpolymeren (i) und den vorstehend beschriebenen Cycloaliphaten (ii) und/oder Cycloolefinen (iii), insbesondere den Cycloaliphaten (ii), weist gleichfalls keine methodischen Besonderheiten auf, sondern erfolgt in Masse oder in einem inerten organischen Medium, vorzugsweise in einem inerten organischen Medium, wobei bevorzugt polare organische Lösemittel angewandt werden.

Wesentlich ist, daß die Umsetzung so lange erfolgt, bis der Gehalt an freien Isocyanatgruppen im Reaktionsgemisch sich stabilisiert oder keine freien Iocyanatgruppen mehr nachweisbar sind. Sind nach der Umsetzung noch freie Isocyanatgruppen vorhanden, werden diese vorzugsweise mit mindestens einem Polyol, Polyamin und/oder Aminoalkohol, wie sie vorstehend beschrieben werden, umgesetzt. Hierdurch resultiert eine Kettenverlängerung des erfindungsgemäßen Polyurethans.

Der Gehalt der erfindungsgemäßen Polyurethane an einreagierten Cycloaliphaten (ii) und/oder Cycloolefine (iii) kann sehr breit variieren. Vorzugsweise liegt er bei 0,01 bis 30, bevorzugt 0,1 bis 25, besonders bevorzugt 0,2 bis 20, ganz besonders bevorzugt 0,25 bis 15 und insbesondere 0,3 bis 10 Gew.-%, jeweils bezogen auf das erfindungsgemäße Polyurethan.

Die erfindungsgemäßen Polyurethane können als solche für die Herstellung von Beschichtungsstoffen, insbesondere Lacken, sowie Klebstoffen und Dichtungsmassen verwendet werden.

Ein besonderer Vorteil ist, daß die erfindungsgemäßen Polyurethane aufgrund ihres Gehalts an Doppelbindungen für die Herstellung von Beschichtungsstoffen, insbesondere Lacken, sowie Klebstoffen und Dichtungsmassen verwendet werden können, die mit aktinischer Strahlung oder mit Dual Cure gehärtet werden können.

Handelt es sich um hydrophile erfindungsgemäße Polyurethane, ist es erfindungsgemäß von Vorteil, sie in der Form einer Dispersion in einem wäßrigem Medium zu verwenden. Das wäßrige Medium enthält im wesentlichen Wasser. Hierbei kann das wäßrige Medium in untergeordneten Mengen organische Lösemittel, Neutralisationsmittel, Vernetzungsmittel und/oder lackübliche Additive und/oder sonstige gelöste feste, flüssige oder gasförmige organische und/oder anorganische, nieder- und/oder hochmolekulare Stoffe enthalten. Im Rahmen der vorliegenden Erfindung ist unter dem Begriff "untergeordnete Menge" eine Menge zu verstehen, welche den wäßrigen Charakter des wäßrigen Mediums nicht aufhebt. Bei dem wäßrigen Medium kann es sich aber auch um reines Wasser handeln.

Zum Zweck der Dispergierung werden die hydrophilen erfindungsgemäßen Polyurethane, die die vorstehend beschriebenen (potentiell) anionischen oder kationischen hydrophilen funktionellen Gruppen enthalten, mit mindestens einem der vorstehend beschriebenen Neutralisationsmittel neutralisiert und hiernach dispergiert. Bei den hydrophilen erfindungsgemäßen Polyurethanen, die nur die nichtionischen hydrophilen funktionellen Gruppen enthalten, erübrigt sich die Anwendung von Neutralisationsmitteln.

Die resultierenden erfindungsgemäßen sekundären Polyurethandispersionen sind ebenfalls hervorragend für die Herstellung wäßriger Beschichtungsstoffe, Klebstoffe und Dichtungsmassen geeignet. Insbesondere sind sie für die Herstellung der erfindungsgemäßen Pfropfmischpolymerisate geeignet.

Die erfindungsgemäßen Pfropfmischpolymerisate sind herstellbar, indem man mindestens ein Monomer (a) in der Gegenwart mindestens eines erfindungsgemäßen Polyurethans (co)polymerisiert.

Werden hierbei hydrophile Polyurethane und überwiegend hydrophobe Monomeren (a) angewandt, resultieren feinteilige erfindungsgemäße Pfropfmischpolymerisate mit einem hydrophoben Kern aus mindestens einem einpolymerisierten olefinisch ungesättigten Monomeren (a) und einer hydrophilen Schale, die mindestens ein hydrophiles erfindungsgemäßes Polyurethan enthält oder hieraus besteht. Diese Variante der erfindungsgemäßen Pfropfmischpolymerisate wird hergestellt, indem man mindestens ein hydrophiles erfindungsgemäßes Polyurethan in einem wäßrigen Medium dispergiert, wonach man mindestens ein hydrophobes olefinisch ungesättigtes Monomer (a) in seiner Gegenwart in Emulsion radikalisch (co)polymerisiert.

Werden dagegen hydrophobe Polyurethane und überwiegend hydrophile Monomeren (a) angewandt, resultieren feinteilige erfindungsgemäße Pfropfmischpolymerisate mit einem hydrophoben Kern, der mindestens ein hydrophobes erfindungsgemäßes Polyurethan enthält oder hieraus besteht, und einer hydrophile Schale, die mindestens ein hydrophiles olefinisch ungesättigtes Monomer (a) einpolymerisierten enthält. Diese Variante wird hergestellt, indem man mindestens ein hydrophobes erfindungsgemäßes Polyurethan in einem wäßrigen Medium dispergiert. Vorteilhafterweise wird dies in einem starken Scherfeld durchgeführt. Methodisch gesehen weist dieses Verfahren keine Besonderheiten auf, sondern kann beispielsweise nach den in der europäischen Patentanmeldung EP 0 401 565 A 1 beschriebenen Dispergierverfahren erfolgen. Hiernach wird mindestens ein hydrophiles olefinisch ungesättigtes Monomer (a) in der Gegenwart der dispergierten hydrophoben erfindungsgemäßen Polyurethane (co)polymerisiert.

Zwischen diesen beiden Extremen sind alle denkbaren Abstufungen der Hydrophilie bzw. der Hydrophobie der erfindungsgemäßen Polyurethane einerseits und der Monomeren (a) andererseits möglich, so daß auch erfindungsgemäße Pfropfmischpolymerisate resultieren, die keinen oder keinen ausgeprägten Kern-Schale-Aufbau aufweisen.

Außerdem können für die Herstellung der erfindungsgemäßen Pfropfmischpolymerisate die nachstehend beschriebenen (Co)Polymerisationsverfahren angewandt werden.

Beispiele hydrophiler und hydrophober Monomere (a), die für die Herstellung der erfindungsgemäßen Pfropfmischpolymerisate geeignet sind, sind:
**Monomere (a1):**
   Hydroxyalkylester der Acrylsäure, Methacrylsäure einer anderen alpha,beta- ethylenisch ungesättigten Carbonsäure, welche sich von einem Alkylenglykol ableiten, der mit der Säure verestert ist, oder durch Umsetzung der Säure mit einem Alkylenoxid erhältlich sind, insbesondere Hydroxyalkylester der Acrylsäure, Methacrylsäure oder Ethacrylsäure, in denen die Hydroxyalkylgruppe bis zu 20 Kohlenstoffatome enthält, wie 2-Hydroxyethyl-, 2-Hydroxypropyl-, 3-Hydroxypropyl-, 3-Hydroxybutyl-, 4-Hydroxybutylacrylat, -methacrylat, -ethacrylat oder -crotonat; 1,4-Bis(hydroxymethyl)cyclohexan-, Octahydro-4,7-methano-1H-inden-dimethanol- oder Methylpropandiolmonoacrylat, -monomethacrylat, -monoethacrylat oder -monocrotonat; oder Umsetzungsprodukte aus cyclischen Estern, wie z.B. ε-Caprolacton und diesen Hydroxyalkylestern; oder olefinisch ungesättigte Alkohole wie Allylalkohol oder Polyole wie Trimethylolpropanmono- oder diallylether oder Pentaerythritmono-, -di- oder -triallylether. Diese höherfunktionellen Monomeren (a1) werden im allgemeinen nur in untergeordneten Mengen verwendet. Im Rahmen der vorliegenden Erfindung sind hierbei unter untergeordneten Mengen an höherfunktionellen Monomeren solche Mengen zu verstehen, welche nicht zur Vernetzung oder Gelierung der Polyacrylatharze führen. So kann beispielsweise der Anteil an Trimethylolpropanmonoallylether 2 bis 10 Gew.-%, bezogen auf das Gesamtgewicht der zur Herstellung des Polyacrylatharzes eingesetzten Monomeren (a1) bis (a6) betragen.
**Monomere (a2):**
   (Meth)Acrylsäurealkyl- oder -cycloalkylester mit bis zu 20 Kohlenstoffatomen im Alkylrest, insbesondere Methyl-, Ethyl-, Propyl-, n-Butyl-, sec.-Butyl-, tert.-Butyl-, Hexyl-, Ethylhexyl-, Stearyl- und Laurylacrylat oder -methacrylat; cycloaliphatische (Meth)acrylsäureester, insbesondere Cyclohexyl-, Isobornyl-, Dicyclopentadienyl-, Octahydro-4,7-methano-1H-inden-methanol- oder tert.-Butylcyclohexyl(meth)acrylat; (Meth)Acrylsäureoxaalkylester oder -oxacycloalkylester wie Ethyltriglykol(meth)acrylat und Methoxyoligoglykol(meth)acrylat mit einem Molekulargewicht Mn von vorzugsweise 550; oder andere ethoxylierte und/oder propoxylierte hydroxylgruppenfreie (Meth)acrylsäurederivate. Diese können in untergeordneten Mengen höherfunktionelle (Meth)Acrylsäurealkyl- oder -cycloalkylester wie Ethylengylkol-, Propylenglykol-, Diethylenglykol-, Dipropylenglykol-, Butylenglykol-, Pentan-1,5-diol-, Hexan-1,6-diol-, Octahydro-4,7-methano-1H-inden-dimethanol- oder Cyclohexan-1,2-, -1,3- oder -1,4-diol-di(meth)acrylat; Trimethylolpropan-di- oder -tri(meth)acrylat; oder Pentaerythrit-di-, -tri- oder -tetra(meth)acrylat; enthalten. Im Rahmen der vorliegenden Erfindung sind hierbei unter untergeordneten Mengen an höherfunktionellen Monomeren (a2) solche Mengen zu verstehen, welche nicht zur Vernetzung oder Gelierung der Polyacrylatharze führen.
**Monomere (a3):**
   mindestens eine Säuregruppe, vorzugsweise eine Carboxylgruppe, pro Molekül tragende ethylenisch ungesättigte Monomer oder ein Gemisch aus solchen Monomeren. Als Monomere (a3) werden besonders bevorzugt Acrylsäure und/oder Methacrylsäure eingesetzt. Es können aber auch andere ethylenisch ungesättigte Carbonsäuren mit bis zu 6 C-Atomen im Molekül verwendet werden. Beispiele für solche Säuren sind Ethacrylsäure, Crotonsäure, Maleinsäure, Fumarsäure und Itaconsäure. Weiterhin können ethylenisch ungesättigte Sulfon- oder Phosphonsäuren, bzw. deren Teilester, als Komponente (a3) verwendet werden. Als Monomere (a3) kommen desweiteren Maleinsäuremono(meth)acryloyloxyethylester, Bernsteinsäuremono(meth)acryloyloxyethylester und Phthalsäuremono(meth)acryloyloxyethylester in Betracht.
**Monomere (a4):**
   Vinylester von in alpha-Stellung verzweigten Monocarbonsäuren mit 5 bis 18 C-Atomen im Molekül. Die verzweigten Monocarbonsäuren können erhalten werden durch Umsetzung von Ameisensäure oder Kohlenmonoxid und Wasser mit Olefinen in Anwesenheit eines flüssigen, stark sauren Katalysators; die Olefine können Crack-Produkte von paraffinischen Kohlenwasserstoffen, wie Mineralölfraktionen, sein und können sowohl verzweigte wie geradkettige acyclische und/oder cycloaliphatische Olefine enthalten. Bei der Umsetzung solcher Olefine mit Ameisensäure bzw. mit Kohlenmonoxid und Wasser entsteht ein Gemisch aus Carbonsäuren, bei denen die Carboxylgruppen vorwiegend an einem quaternären Kohlenstoffatom sitzen. Andere olefinische Ausgangsstoffe sind z.B. Propylentrimer, Propylentetramer und Diisobutylen. Die Vinylester können aber auch auf an sich bekannte Weise aus den Säuren hergestellt werden, z.B. indem man die Säure mit Acetylen reagieren läßt. Besonders bevorzugt werden - wegen der guten Verfügbarkeit - Vinylester von gesättigten aliphatischen Monocarbonsäuren mit 9 bis 11 C-Atomen, die am alpha-C-Atom verzweigt sind, eingesetzt.
**Monomere (a5):**
   Umsetzungsprodukt aus Acrylsäure und/oder Methacrylsäure mit dem Glycidylester einer in alpha-Stellung verzweigten Monocarbonsäure mit 5 bis 18 C-Atomen je Molekül. Die Umsetzung der Acryl- oder Methacrylsäure mit dem Glycidylester einer Carbonsäure mit einem tertiären alpha-Kohlenstoffatom kann vorher, während oder nach der Polymerisationsreaktion erfolgen. Bevorzugt wird als Komponente (a5) das Umsetzungsprodukt von Acryl- und/oder Methacrylsäure mit dem Glycidylester der Versatic®-Säure eingesetzt. Dieser Glycidylester ist unter dem Namen Cardura® E10 im Handel erhältlich. Ergänzend wird auf Römpp Lexikon Lacke und Druckfarben, Georg Thieme Verlag, Stuttgart, New York, 1998, Seiten 605 und 606, verwiesen.
**Monomere (a6):**
   Im wesentlichen säuregruppenfreie ethylenisch ungesättigte Monomere wie
      - Olefine wie Ethylen, Propylen, But-1-en, Pent-1-en, Hex-1-en, Cyclohexen, Cyclopenten, Norbonen, Butadien, Isopren, Cylopentadien und/oder Dicyclopentadien;
      - (Meth)Acrylsäureamide wie (Meth)Acrylsäureamid, N-Methyl -, N,N-Dimethyl-, N-Ethyl-, N,N-Diethyl-, N-Propyl-, N,N-Dipropyl, N-Butyl-, N,N-Dibutyl-, N-Cyclohexyl- und/oder N,N-Cyclohexyl-methyl-(meth)acrylsäureamid;
      - Epoxidgruppen enthaltende Monomere wie der Glycidylester der Acrylsäure, Methacrylsäure, Ethacrylsäure, Crotonsäure, Maleinsäure, Fumarsäure und/oder Itaconsäure;
      - vinylaromatische Kohlenwasserstoffe, wie Styrol, alpha-Alkylstyrole, insbesondere alpha-Methylstyrol und/oder Vinyltoluol;
      - Diarylethylene, insbesondere solche der allgemeinen Formel III:

         **R**¹²**R**¹³**C=CR**¹⁴**R**¹⁵ (III),

         worin die Reste R¹², R¹³ , R¹⁴ und R¹⁵ jeweils unabhängig voneinander für Wasserstoffatome oder substituierte oder unsubstituierte Alkyl-, Cycloalkyl-, Alkylcycloalkyl-, Cycloalkylalkyl-, Aryl-, Alkylaryl-, Cycloalkylaryl- Arylalkyl- oder Arylcycloalkylreste stehen, mit der Maßgabe, daß mindestens zwei der Variablen R¹², R¹³ , R¹⁴ und R¹⁵ für substituierte oder unsubstituierte Aryl-, Arylalkyl- oder Arylcycloalkylreste, insbesondere substituierte oder unsubstituierte Arylreste, stehen. Beispiele geeigneter Alkylreste sind Methyl, Ethyl, Propyl, Isopropyl, n-Butyl, iso-Butyl, tert.-Butyl, Amyl, Hexyl oder 2-Ethylhexyl. Beispiele geeigneter Cycloalkylreste sind Cyclobutyl, Cyclopentyl oder Cyclohexyl. Beispiele geeigneter Alkylcycloalkylreste sind Methylencyclohexan, Ethylencyclohexan oder Propan-1,3-diylcyclohexan. Beispiele geeigneter Cycloalkylalkylreste sind 2-, 3- oder 4-Methyl-, -Ethyl-, -Propyl- oder -Butylcyclohex-1-yl. Beispiele geeigneter Arylreste sind Phenyl, Naphthyl oder Biphenylyl, vorzugsweise Phenyl und Naphthyl und insbesondere Phenyl. Beispiele geeigneter Alkylarylreste sind Benzyl oder Ethylen- oder Propan-1,3-diyl-benzol. Beispiele geeigneter Cycloalkylarylreste sind 2-, 3-, oder 4-Phenylcyclohex-1-yl. Beispiele geeigneter Arylalkylreste sind 2-, 3- oder 4-Methyl-, -Ethyl-, -Propyl- oder -Butylphen-1-yl. Beispiele geeigneter Arylcycloalkykeste sind 2-, 3- oder 4-Cyclohexylphen-1-yl. Vorzugsweise handelt es sich bei den Arylresten R¹², R¹³ , R¹⁴ und/oder R¹⁵ um Phenyl- oder Naphthylreste, insbesondere Phenylreste. Die in den Resten R¹², R¹³, R¹⁴ und/oder R¹⁵ gegebenenfalls vorhandenen Substituenten sind elektronenziehende oder elektronenschiebende Atome oder organische Reste, insbesondere Halogenatome, Nitril-, Nitro-, partiell oder vollständig halogenierte Alkyl-, Cycloalkyl-, Alkylcycloalkyl-, Cycloalkylalkyl-, Aryl-, Alkylaryl-, Cycloalkylaryl- Arylalkyl- und Arylcycloalkylreste; Aryloxy-, Alkyloxy- und Cycloalkyloxyreste; Arylthio-, Alkylthio- und Cycloalkylthioreste und/oder primäre, sekundäre und/oder tertiäre Amionogruppen. Besonders vorteilhaft sind Diphenylethylen, Dinaphthalinethylen, cis- oder trans- Stilben, Vinyliden-bis(4-N,N-dimethylaminobenzol), Vinyliden-bis(4-aminobenzol) oder Vinyliden-bis(4-nitrobenzol), insbesondere Diphenylethylen (DPE), weswegen sie bevorzugt verwendet werden. Vorzugsweise werden diese Monomeren (a6) nicht als die alleinigen Monomere eingesetzt, sondern stets gemeinsam mit anderen Monomeren (a), wobei sie die Copolymerisation in vorteilhafter Weise derart regeln, daß auch eine radikalische Copolymerisation in Batch-Fahrweise möglich ist;
      - Nitrile wie Acrylnitril und/oder Methacrylnitril;
      - Vinylverbindungen wie Vinylchlorid, Vinylfluorid, Vinylidendichlorid, Vinylidendifluorid; N-Vinylpyrrolidon; Vinylether wie Ethylvinylether, n-Propylvinylether, Isopropylvinylether, n-Butylvinylether, Isobutylvinylether und/oder Vinylcyclohexylether; Vinylester wie Vinylacetat, Vinylpropionat, Vinylbutyrat, Vinylpivalat, Vinylester der Versatic®-Säuren, die unter dem Markennamen VeoVa® von der Firma Deutsche Shell Chemie vertrieben werden. (ergänzend wird auf Römpp Lexikon Lacke und Druckfarben, Georg Thieme Verlag, Stuttgart, New York, 1998, Seite 598 sowie Seiten 605 und 606, verwiesen) und/oder der Vinylester der 2-Methyl-2-ethylheptansäure; und/oder
      - Polysiloxanmakromonomere, die ein zahlenmittleres Molekulargewicht Mn von 1.000 bis 40.000, bevorzugt von 2.000 bis 20.000, besonders bevorzugt 2.500 bis 10.000 und insbesondere 3.000 bis 7.000 und im Mittel 0,5 bis 2,5, bevorzugt 0,5 bis 1,5, ethylenisch ungesättigte Doppelbindungen pro Molekül aufweisen, wie sie in der DE 38 07 571 A 1 auf den Seiten 5 bis 7, der DE 37 06 095 A 1 in den Spalten 3 bis 7, der EP 0 358 153 B 1 auf den Seiten 3 bis 6, in der US 4,754,014 A in den Spalten 5 bis 9, in der DE 44 21 823 A 1 oder in der der internationalen Patentanmeldung WO 92/22615 auf Seite 12, Zeile 18, bis Seite 18, Zeile 10, beschrieben sind, oder Acryloxysilan-enthaltende Vinylmonomere, herstellbar durch Umsetzung hydroxyfunktioneller Silane mit Epichlorhydrin und anschließender Umsetzung des Reaktionsproduktes mit Methacrylsäure und/oder Hydroxyalkylestern der (Meth)acrylsäure.

Aus diesen vorstehend beispielhaft beschriebenen geeigneten Monomeren (a) kann der Fachmann die für den jeweiligen Verwendungszweck besonders gut geeigneten hydrophilen oder hydrophoben Monomeren (a) anhand ihrer bekannten physikalisch chemischen Eigenschaften und Reaktivitäten leicht auswählen. Gegebenenfalls kann er zu diesem Zwecke einige wenige orientierende Vorversuche durchführen. Insbesondere wird er hierbei darauf achten, daß die Monomeren (a) keine funktionellen Gruppen, insbesondere (potentiell) ionische funktionelle Gruppen, enthalten, die mit den (potentiell) ionischen funktionellen Gruppen in den hydrophilen erfindungsgemäßen Polyurethanen unerwünschte Wechselwirkungen eingehen.

Erfindungsgemäß resultieren besondere Vorteile, wenn die Monomeren (a) so ausgewählt werden, daß das Eigenschaftsprofil der aufgepfropften (Co)Polymerisate im wesentlichen von den vorstehend beschriebenen hydrophilen oder hydrophoben (Meth)Acrylatmonomeren (a) bestimmt wird, wobei die anderen Monomeren (a) dieses Eigenschaftsprofil in vorteilhafter Weise breit variieren.

Erfindungsgemäß resultieren ganz besondere Vorteile, wenn Gemische der Monomeren (a1), (a2) und (a6) sowie gegebenenfalls (a3) verwendet werden.

Methodisch gesehen weist die Herstellung der erfindungsgemäßen Pfropfmischpolymerisate keine Besonderheiten auf, sondern erfolgt nach den üblichen und bekannten Methoden der radikalischen (Co)Polymerisation in Masse, Lösung oder Emulsion in Gegenwart mindestens eines Polymerisationsinitiators.

Erfolgt die (Co)Polymerisation in Masse oder Lösung kann das erfindungsgemäße Pfropfmischpolymerisat in dieser Form weiterverarbeitet oder verwendet werden. Insbesondere wird es in einem wäßrigen Medium dispergiert, wodurch eine erfindungsgemäße Sekundärdispersion resultiert.

Vorzugsweise wird die (Co)Polymerisation in Emulsion, so wie beispielsweise in dem Patent DE 197 22 862 C 1 oder den Patentanmeldungen DE 196 45 761 A 1, EP-A 522 419 A 1 oder EP 0 522 420 A 1 beschrieben, oder in Miniemulsion oder Mikroemulsion durchgeführt. Zur Miniemulsion und Mikroemulsion wird ergänzend auf die Patentanmeldungen und die Literaturstellen DE 196 28 142 A 1, DE 196 28 143 A 1 oder EP 0 401 565 A 1, Emulsion Polymerization and Emulsion Polymers, Editoren. P. A. Lovell und Mohamed S. El-Aasser, John Wiley and Sons, Chichester, New York, Weinheim, 1997, Seiten 700 und folgende; Mohamed S. El-Aasser, Advances in Emulsion Polymerization and Latex Technology, 30^{th} Annual Short Course, Volume 3, June 7-11, 1999, Emulsion Polymers Institute, Lehigh University, Bethlehem, Pennsylvania, U.S.A. verwiesen. Bei der (Co)Polymerisation in Emulsion, Miniemulsion oder Mikroemulsion fallen die erfindungsgemäßen Pfropfmischpolymerisate in der Form erfindungsgemäßer Primärdispersionen an.

Als Reaktoren für die (Co)Polymerisationsverfahren kommen die üblichen und bekannten Rührkessel, Rührkesselkaskaden, Rohrreaktoren, Schlaufenreaktoren oder Taylorreaktoren, wie sie beispielsweise in den Patentschriften DE-B-1 071 241A 1, EP 0 498 583 A 1 oder DE 198 28 742 A 1 oder in dem Artikel von K. Kataoka in Chemical Engineering Science, Band 50, Heft 9, 1995, Seiten 1409 bis 1416, beschrieben werden, in Betracht.

Die (Co)Polymerisation wird vorteilhafterweise bei Temperaturen oberhalb der Raumtemperatur und unterhalb der niedrigsten Zersetzungstemperatur der jeweils verwendeten Monomeren durchgeführt, wobei bevorzugt ein Temperaturbereich von 30 bis 180°C, ganz besonders bevorzugt 70 bis 150°C und insbesondere 80 bis 110°C gewählt wird.

Bei Verwendung besonders leicht flüchtiger Monomeren (a) und/oder von Emulsionen kann die (Co)Polymerisation auch unter Druck, vorzugsweise unter 1,5 bis 3.000 bar, besonders bevorzugt 5 bis 1.500 und insbesondere 10 bis 1.000 bar durchgeführt werden.

Beispiele geeigneter Polymerisationsinitiatoren sind freie Radikale bildende Initiatoren wie Dialkylperoxide, wie Di-tert.-Butylperoxid oder Dicumyl-peroxid; Hydroperoxide, wie Cumolhydroperoxid oder tert.- Butylhydroperoxid; Perester, wie tert.-Butylperbenzoat, tert.-Butylperpivalat, tert.-Butylper-3,5,5-trimethylhexanoat oder tert.-Butylper-2-ethylhexanoat; Kalium-, Natrium- oder Ammoniumsperoxodisulfat; Azodinitrile wie Azobisisobutyronitril; C-C-spaltende Initiatoren wie Benzpinakolsilylether; oder eine Kombination eines nicht oxidierenden Initiators mit Wasserstoffperoxid. Bevorzugt werden wasserunlösliche Initiatoren verwendet. Die Initiatoren werden bevorzugt in einer Menge von 0,1 bis 25 Gew.-%, besonders bevorzugt von 2 bis 10 Gew.-%, bezogen auf das Gesamtgewicht der Monomeren (a), eingesetzt.

In den erfindungsgemäßen Pfropfmischpolymerisaten kann das Mengenverhältnis von Kern zu Schale oder von erfindungsgemäßem Polyurethan zu aufgepfropften Monomeren (a) außerordentlich breit variieren, was ein besonderer Vorteil der erfindungsgemäßen Pfropfmischpolymerisate ist. Vorzugsweise liegt dieses Verhältnis bei 1 : 100 bis 100 : 1, bevorzugt 1 : 50 bis 50 : 1, besonders bevorzugt 30 : 1 bis 1 : 30, ganz besonders bevorzugt 20 : 1 bis 1 : 20 und insbesondere 10 : 1 bis 1 : 10. Ganz besondere Vorteile resultieren, wenn dieses Verhältnis in etwa bei 3,5 : 1 bis 1 : 3,5, insbesondere 1,5 : 1 bis 1 : 1,5 liegt.

Die erfindungsgemäßen Pfropfmischpolymerisate können aus den Primärdispersionen, in denen sie anfallen, isoliert und den unterschiedlichsten Verwendungszwecken, insbesondere in lösemittelhaltigen, wasser- und lösemittelfreien pulverförmigen festen oder wasser- und lösemittelfreien flüssigen Beschichtungsstoffen, Klebstoffen und Dichtungsmassen, zugeführt werden. Erfindungsgemäß ist es indes von Vorteil, die Primärdispersionen als solche für die Herstellung von wäßrigen Beschichtungsstoffen, Klebstoffen und Dichtungsmassen zu verwenden.

Die erfindungsgemäßen wäßrigen Klebstoffe können außer den erfindungsgemäßen Polyurethanen und den erfindungsgemäßen Pfropfmischpolymerisaten weitere geeignete übliche und bekannte Bestandteile in wirksamen Mengen enthalten. Beispiele geeigneter Bestandteile sind die nachstehend beschriebenen Vernetzungsmittel und Additive, soweit sie für die Herstellung von Klebstoffen in Betracht kommen.

Die erfindungsgemäßen wäßrigen Dichtungsmassen können ebenfalls außer den erfindungsgemäßen Polyurethanen und den erfindungsgemäßen Pfropfmischpolymerisaten weitere geeignete übliche und bekannte Bestandteile in wirksamen Mengen enthalten. Beispiele geeigneter Bestandteile sind ebenfalls die nachstehend beschriebenen Vernetzungsmittel und Additive, soweit sie für die Herstellung von Dichtungsmassen in Betracht kommen.

Die Primärdispersionen der erfindungsgemäßen Pfropfmischpolymerisate sind vor allem für die Herstellung der erfindungsgemäßen wäßrigen Beschichtungsstoffe, insbesondere der erfindungsgemäßen wäßrigen Lacke, geeignet. Beispiele für erfindungsgemäße wäßrige Lacke sind Füller, Unidecklacke, Wasserbasislacke und Klarlacke. Ganz besondere Vorteile entfalten die erfindungsgemäßen Primärdispersionen, wenn sie zur Herstellung der erfindungsgemäßen Wasserbasislacke verwendet werden.

In den erfindungsgemäßen Wasserbasislacken sind die Polyurethane und/oder die erfindungsgemäßen Pfropfmischpolymerisate, insbesondere aber die erfindungsgemäßen Pfropfmischpolymerisate, vorteilhafterweise in einer Menge von 1,0 bis 50, bevorzugt 2,0 bis 40, besonders bevorzugt 3,0 bis 35, ganz besonders bevorzugt 4,0 bis 30 und insbesondere 5,0 bis 25 Gew.-%, jeweils bezogen auf das Gesamtgewicht des jeweiligen erfindungsgemäßen Wasserbasislacks, enthalten.

Der weitere wesentliche Bestandteil des erfindungsgemäßen Wasserbasislacks ist mindestens ein farb- und/oder effektgebendes Pigment. Die Pigmente können aus anorganischen oder organischen Verbindungen bestehen. Der erfindungsgemäße Wasserbasislack gewährleistet daher aufgrund dieser Vielzahl geeigneter Pigmente eine universelle Einsatzbreite und ermöglicht die Realisierung einer Vielzahl von Farbtönen und optischer Effekte.

Als Effektpigmente können Metallplättchenpigmente wie handelsübliche Aluminiumbronzen, gemäß DE-A-36 36 183 chromatierte Aluminiumbronzen, handelsübliche Edelstahlbronzen und nichtmetallische Effektpigmente, wie zum Beispiel Perlglanz- bzw. Interferenzpigmente, eingesetzt werden. Ergänzend wird auf Römpp Lexikon Lacke und Druckfarben, Georg Thieme Verlag, 1998, Seiten 176, »Effektpigmente« und Seiten 380 und 381 »Metalloxid-Glimmer-Pigmente« bis »Metallpigmente«, verwiesen.

Beispiele für geeignete anorganische farbgebende Pigmente sind Titandioxid, Eisenoxide, Sicotransgelb und Ruß. Beispiele für geeignete organische farbgebende Pigmente sind Thioindigopigmente Indanthrenblau, Cromophthalrot, Irgazinorange und Heliogengrün. Ergänzend wird auf Römpp Lexikon Lacke und Druckfarben, Georg Thieme Verlag, 1998, Seiten 180 und 181, »Eisenblau-Pigmente« bis »Eisenoxidschwarz«, Seiten 451 bis 453 »Pigmente« bis »Pigmentsvolumenkonzentration«, Seite 563 »Thioindigo-Pigmente« und Seite 567 »Titandioxid-Pigmente« verwiesen.

Der Anteil der Pigmente an dem erfindungsgemäßen Wasserbasislack kann außerordentlich breit variieren und richtet sich vor allem nach der Deckkraft der Pigmente, dem gewünschten Farbton und dem gewünschten optischen Effekt. Vorzugsweise sind die Pigmente in dem erfindungsgemäßen Wasserbasislack in einer Menge von 0,5 bis 50, bevorzugt 0,5 bis 45, besonders bevorzugt 0,5 bis 40, ganz besonders bevorzugt 0,5 bis 35 und insbesondere 0,5 bis 30 Gew.-%, jeweils bezogen auf das Gesamtgewicht des erfindungsgemäßen Wasserbasislacks, enthalten. Dabei kann auch das Pigment/Bindemittel Verhältnis, d. h. das Verhältnis der Pigmente zu den erfindungsgemäßen Polyurethanen und/oder zu den erfindungsgemäßen Pfropfmischpolymerisaten sowie sonstigen gegebenenfalls vorhandenen Bindemitteln, außerordentlich breit variieren. Vorzugsweise liegt dieses Verhältnis bei 6,0 : 1,0 bis 1,0 : 50, bevorzugt 5 : 1,0 bis 1,0 : 50, besonders bevorzugt 4,5 : 1,0 bis 1,0 : 40, ganz besonders bevorzugt 4 : 1,0 bis 1,0 : 30 und insbesondere 3,5 : 1,0 bis 1,0 : 25.

Diese Pigmente können auch über Pigmentpasten in die erfindungsgemäßen Wasserbasislacke eingearbeitet werden, wobei als Reibharze u.a. die erfindungsgemäßen Polyurethane und/oder die erfindungsgemäßen Pfropfmischpolymerisate in Betracht kommen.

Diese Pigmente entfallen bei der Verwendung des erfindungsgemäßen Beschichtungsstoffs als Klarlack.

Der erfindungsgemäße Beschichtungsstoff, speziell der erfindungsgemäße Wasserbasislack, kann mindestens ein Vernetzungsmittel enthalten.

Beispiele geeigneter Vernetzungsmittel sind Aminoplastharze, wie sie beispielsweise in Römpp Lexikon Lacke und Druckfarben, Georg Thieme Verlag, 1998, Seite 29, »Aminoharze«, dem Lehrbuch "Lackadditive" von Johan Bieleman, Wiley-VCH, Weinheim, New York, 1998, Seiten 242 ff., dem Buch "Paints, Coatings and Solvents", second completely revised edition, Edit. D. Stoye und W. Freitag, Wiley-VCH, Weinheim, New York, 1998, Seiten 80 ff., den Patentschriften US 4 710 542 A 1 oder EP-B-0 245 700 A 1 sowie in dem Artikel von B. Singh und Mitarbeiter "Carbamylmethylated Melamines, Novel Crosslinkers for the Coatings Industry", in Advanced Organic Coatings Science and Technology Series, 1991, Band 13, Seiten 193 bis 207, beschrieben werden, Carboxylgruppen enthaltende Verbindungen oder Harze, wie sie beispielsweise in der Patentschrift DE 196 52 813 A 1 beschrieben werden, Epoxidgruppen enthaltende Verbindungen oder Harze, wie sie beispielsweise in den Patentschriften EP 0 299 420 A 1, DE 22 14 650 B 1, DE 27 49 576 B 1, US 4,091,048 A 1 oder US 3,781,379 A 1 beschrieben werden, unblockierte und blockierte Polyisocyanate, wie sie beispielsweise in den Patentschriften US 4,444,954 A 1, DE 196 17 086 A 1, DE 196 31 269 A 1, EP 0 004 571 A 1 oder EP 0 582 051 A 1 beschrieben werden, und/oder Tris(alkoxycarbonylamino)-triazine, wie sie in den Patentschriften US 4,939,213 A 1, US 5,084,541 A 1, US 5,288,865 A 1 oder EP 0 604 922 A 1 beschrieben werden.

Die Epoxide und die unblockierten Polyisocyanate, insbesondere die Polyisocyanate, werden in Zwei- oder Mehrkomponentensysteme angewandt.

Liegen die erfindungsgemäßen Wasserbasislacke als Einkomponentensysteme vor werden vorzugsweise Aminoplastharze als die überwiegenden oder alleinigen Vernetzungsmittel verwendet. Die sonstigen vorstehend genannten Vernetzungsmittel können als zusätzliche Vernetzungsmittel für die weitere vorteilhafte Variierung des Eigenschaftsprofils der erfindungsgemäßen Wasserbasislacke und der hieraus hergestellten erfindungs gemäßen Basislackierungen und erfindungsgemäßen farb- und/oder effektgebenden Mehrschichtlackierungen mit verwendet werden, wobei ihr Anteil an den Vernetzungsmitteln <50 Gew.-% beträgt.

Vorzugsweise werden die Vernetzungsmittel in den erfindungsgemäßen Wasserbasislacken in einer Menge von 0,1 bis 30, bevorzugt 0,3 bis 20, besonders bevorzugt 0,5 bis 10 und insbesondere 1,0 bis 8,0 Gew.-%, jeweils bezogen auf das Gesamtgewicht des jeweiligen erfindungsgemäßen Wasserbasislacks, angewandt.

Zusätzlich zu den vorstehend beschriebenen Bestandteilen kann der erfindungsgemäße Beschichtungsstoff, insbesondere der Wasserbasislack, übliche und bekannte Bindemittel und/oder Additive in wirksamen Mengen enthalten.

Beispiele üblicher und bekannter Bindemittel sind oligomere und polymere, thermisch härtbare, lineare und/oder verzweigte und/oder blockartig, kammartig und/oder statistisch aufgebaute Poly(meth)acrylate oder Acrylatcopolymerisate, insbesondere die in der Patentschrift DE 197 36 535 A 1 beschriebenen, Polyester, insbesondere die in den Patentschriften DE 40 09 858 A 1 oder DE 44 37 535 A 1 beschriebenen, Alkyde, acrylierte Polyester, Polylactone, Polycarbonate, Polyether, Epoxidharz-Amin-Addukte, (Meth)Acrylatdiole, partiell verseifte Polyvinylester, Polyurethane und acrylierte Polyurethane, wie die in den Patentschriften EP 0 521 928 A 1, EP 0 522 420 A 1, EP 0 522 419 A 1, EP 0 730 613 A 1 oder DE 44 37 535 A 1 beschriebenen, oder Polyharnstoffe.

Wenn der erfindungsgemäße Beschichtungsstoff nicht nur thermisch sondern auch mit aktinischer Strahlung, insbesondere UV-Strahlung und/oder Elektronenstrahlung, härtbar sein soll (Dual Cure), enthält er mindestens einen Bestandteil, welcher mit aktinischer Strahlung aktivierbar ist.

Als aktivierbare Bestandteile kommen grundsätzlich alle mit aktinischer Strahlung, insbesondere UV-Strahlung und/oder Elektronenstrahlung, härtbaren oligomeren und polymeren Verbindungen in Betracht, wie sie üblicherweise auf dem Gebiet der UV-härtbaren oder mit Elektronenstrahlung härtbaren Beschichtungsstoffe verwendet werden.

Vorteilhafterweise werden strahlenhärtbare Bindemittel als aktivierbare Bestandteile verwendet. Beispiele geeigneter strahlenhärtbarer Bindemittel sind (meth)acrylfunktionelle (Meth)Acrylcopolymere, Polyetheracrylate, Polyesteracrylate, ungesättigte Polyester, Epoxyacrylate, Urethanacrylate, Aminoacrylate, Melaminacrylate, Silikonacrylate, Isocyanatoacrylate und die entsprechenden Methacrylate. Bevorzugt werden Bindemittel eingesetzt, die frei von aromatischen Struktureinheiten sind. Bevorzugt werden daher Urethan(meth)acrylate und/oder Polyester(meth)acrylate, besonders bevorzugt aliphatische Urethanacrylate, eingesetzt.

Beispiele geeigneter Additive sind
- organische und anorganische Füllstoffe wie Kreide, Calciumsulfat, Bariumsulfat, Silikate wie Talk oder Kaolin, Kieselsäuren, Oxide wie Aluminiumhydroxid oder Magnesiumhydroxid oder organische Füllstoffe wie Textilfasern, Cellulosefasern, Polyethylenfasem oder Holzmehl; ergänzend wird auf Römpp Lexikon Lacke und Druckfarben, Georg Thieme Verlag, 1998, Seiten 250 ff., »Füllstoffe«, verwiesen;
- thermisch härtbare Reaktiverdünner wie stellungsisomere Diethyloctandiole oder Hydroxylgruppen enthaltende hyperverzweigte Verbindungen oder Dendrimere, wie sie in den Patentanmeldungen DE 198 09 643 A 1, DE 198 40 605 A 1 oder DE 198 05 421 A 1 beschrieben werden;
- mit aktinischer Strahlung härtbarer Reaktivverdünner, wie sie in Römpp Lexikon Lacke und Druckfarben, Georg Thieme Verlag, Stuttgart, New York, 1998, auf Seite 491 unter dem Stichwort »Reaktivverdünner« beschrieben werden;
- Photoinitiatoren und Coinitiatoren, wie sie in Römpp Lexikon Lacke und Druckfarben, Georg Thieme Verlag Stuttgart, 1998, Seiten 444 bis 446, beschrieben werden;
- niedrig siedende und/oder hochsiedende organische Lösemittel ("lange Lösemittel");
- UV-Absorber;
- Lichtschutzmittel wie HALS-Verbindungen, Benztriazole oder Oxalanilide;
- Radikalfänger;
- thermolabile radikalische Initiatoren wie organische Peroxide, organische Azoverbindungen oder C-C-spaltende Initiatoren wie Dialkylperoxide, Peroxocarbonsäuren, Peroxodicarbonate, Peroxidester, Hydroperoxide, Ketonperoxide, Azodinitrile oder Benzpinakolsilylether;
- Katalysatoren für die Vernetzung wie Dibutylzinndilaurat, Lithiumdecanoat oder Zinkoctoat oder mit Aminen blockierte organische Sulfonsäuren;
- Entlüftungsmittel wie Diazadicycloundecan;
- Slipadditive;
- Polymerisationsinhibitoren;
- Entschäumer;
- Emulgatoren, insbesondere nicht ionische Emulgatoren wie alkoxylierte Alkanole, Polyole, Phenole und Alkylphenole oder anionische Emulgatoren wie Alkalisalze oder Ammoniumsalze von Alkancarbonsäuren, Alkansulfonsäuren und Sulfosäuren von alkoxylierten Alkanolen, Polyolen, Phenolen und Alkylphenolen;
- Netzmittel wie Siloxane, fluorhaltige Verbindungen, Carbonsäurehalbester, Phosphorsäureester, Polyacrylsäuren und deren Copolymere oder Polyurethane;
- Haftvermittler wie Tricyclodecandimethanol;
- Verlaufmittel;
- filmbildende Hilfsmittel wie Cellulose-Derivate;
- transparente Füllstoffe auf der Basis von Titandioxid, Siliziumdioxid, Aluminiumoxid oder Zirkoniumoxid; ergänzend wird noch auf das Römpp Lexikon Lacke und Druckfarben, Georg Thieme Verlag, Stuttgart, 1998, Seiten 250 bis 252, verwiesen;
- rheologiesteuernde Additive, wie die aus den Patentschriften WO 94/22968, EP 0 276 501 A 1, EP 0 249 201 A 1 oder WO 97/12945 bekannten; vernetzte polymere Mikroteilchen, wie sie beispielsweise in der EP 0 008 127 A 1 offenbart sind; anorganische Schichtsilikate, vorzugsweise Smektite, insbesondere Montmorillonite und Hectorite, wie Aluminium-Magnesium-Silikate, Natrium-Magnesium- und Natrium-Magnesium-Fluor-Lithium-Schichtsilikate des Montmorillonit-Typs oder anorganische Schichtsilikate wie Aluminium-Magnesium-Silikate, Natrium-Magnesium- und Natrium-Magnesium-Fluor-Lithium-Schichtsilikate des Montmorillonit-Typs (ergänzend wird auf das Buch von Johan Bielemann »Lackadditive«, Wiley-VCH, Weinheim, New York, 1998, Seiten17 bis 30, verwiesen); Kieselsäuren wie Aerosile; oder synthetische Polymere mit ionischen und/oder assoziativ wirkenden Gruppen wie Polyvinylalkohol, Poly(meth)acrylamid, Poly(meth)acrylsäure, Polyvinylpyrrolidon, Styrol-Maleinsäureanhydrid- oder Ethylen-Maleinsäureanhydrid-Copolymere und ihre Derivate oder hydrophob modifizierte Polyacrylate; oder assoziative Verdickungsmittel auf Polyurethanbasis, wie sie in Römpp Lexikon Lacke und Druckfarben, Georg Thieme Verlag, Stuttgart, New York, 1998, »Verdickungsmittel«, Seiten 599 bis 600, und in dem Lehrbuch »Lackadditive« von Johan Bieleman, Wiley-VCH, Weinheim, New York, 1998, Seiten 51 bis 59 und 65, beschrieben werden; und/oder
- Flammschutzmittel.

Weitere Beispiele geeigneter Lackadditive werden in dem Lehrbuch »Lackadditive« von Johan Bieleman, Wiley-VCH, Weinheim, New York, 1998, beschrieben.

Die erfindungsgemäßen Wasserbasislacke weisen bei Spritzviskosität vorzugsweise einen Festkörpergehalt von 5,0 bis 60, bevorzugt 10 bis 60, besonders bevorzugt 13 bis 60 und insbesondere 13 bis 55 Gew.-%, jeweils bezogen auf das Gesamtgewicht des jeweiligen erfindungsgemäßen Wasserbasislacks, auf.

Die Herstellung des erfindungsgemäßen Wasserbasislacks weist keine Besonderheiten auf, sondern erfolgt in üblicher und bekannter Weise durch Vermischen der vorstehend beschriebenen Bestandteile in geeigneten Mischaggregaten wie Rührkessel, Dissolver, Rührwerksmühlen oder Extruder nach den für die Herstellung der jeweiligen Wasserbasislacke geeigneten Verfahren.

Der erfindungsgemäße Wasserbasislack dient der Herstellung der erfindungsgemäßen Lackierungen, insbesondere Mehrschichtlackierungen, auf grundierten oder ungrundierten Substraten.

Als Substrate kommen alle zu lackierenden Oberflächen, die durch eine Härtung der hierauf befindlichen Lackierungen unter Anwendung von Hitze oder Hitze und aktinischer Strahlung nicht geschädigt werden, in Betracht. Geeignete Subtrate bestehen beispielsweise aus Metallen, Kunststoffen, Holz, Keramik, Stein, Textil, Faserverbunden, Leder, Glas, Glasfasern, Glas- und Steinwolle, mineral- und harzgebundenen Baustoffen, wie Gips- und Zementplatten oder Dachziegel, sowie Verbunden dieser Materialien. Demnach ist der erfindungsgemäße Wasserbasislack auch für Anwendungen außerhalb der Kfz-Lackierung geeignet. Hierbei kommt er insbesondere für die Lackierung von Möbeln und die industrielle Lackierung, inklusive Coil Coating, Container Coating und die Imprägnierung oder Beschichtung elektrotechnischer Bauteile, in Betracht. Im Rahmen der industriellen Lackierungen eignet er sich für die Lackierung praktisch aller Teile für den privaten oder industriellen Gebrauch wie Radiatoren, Haushaltsgeräte, Kleinteile aus Metall wie Schrauben und Muttern, Radkappen, Felgen, Emballagen oder elektrotechnische Bauteile wie Motorwicklungen oder Transformatorwicklungen.

Das vorstehend Gesagte gilt auch für die erfindungsgemäßen Füller, Unidecklacke und Klarlacke sowie die erfindungsgemäßen Klebstoffe und Dichtungsmassen sinngemäß.

Im Falle elektrisch leitfähiger Substrate können Grundierungen verwendet werden; die in üblicher und bekannter Weise aus Elektrotauchlacken (ETL) hergestellt werden. Hierfür kommen sowohl anodische (ATL) als auch kathodische (KTL) Elektrotauchlacke, insbesondere aber KTL, in Betracht.

Mit der erfindungsgemäßen Mehrschichtlackierung können auch grundierte oder nicht grundierte Kunststoffe wie z. B. ABS, AMMA, ASA, CA, CAB, EP, UF, CF, MF, MPF, PF, PAN, PA, PE, HDPE, LDPE, LLDPE, UHMWPE, PET, PMMA, PP, PS, SB, PUR, PVC, RF, SAN, PBT, PPE, POM, PUR-RIM, SMC, BMC, PP-EPDM und UP (Kurzbezeichnungen nach DIN 7728T1) sowie deren Polymerblends oder die mit diesen Kunststoffen hergestellten faserverstärkten Kompositamaterialien lackiert werden.

Im Falle von nichtfunktionalisierten und/oder unpolaren Substratoberflächen können diese vor der Beschichtung in bekannter Weise einer Vorbehandlung, wie mit einem Plasma oder mit Beflammen, unterzogen oder mit einer Hydrogrundierung versehen werden.

Die erfindungsgemäßen Mehrschichtlackierungen können in unterschiedlicher erfindungsgemäßer Weise hergestellt werden.

Eine erste bevorzugte Variante des erfindungsgemäßen Verfahrens umfaßt die Verfahrensschritte:
(I) Herstellen einer Basislackschicht durch Applikation des erfindungsgemäßen Wasserbasislacks auf das Substrat,
(II) Trocknen der Basislackschicht,
(III) Herstellen einer Klarlackschicht durch Applikation eines Klarlacks auf die Basislackschicht und
(IV) gemeinsame Härtung der Basislackschicht und der Klarlackschicht, wodurch die Basislackierung und die Klarlackierung resultieren (Naß-in-naß-Verfahren).

Diese Variante bietet insbesondere bei der Lackierung von Kunststoffen besondere Vorteile und wird deshalb hier besonders bevorzugt angewandt.

Eine zweite bevorzugte Variante des erfindungsgemäßen Verfahrens umfaßt die Verfahrensschritte:
(I) Herstellen einer Füllerlackschicht durch Applikation eines Füllers auf das Substrat,
(II) Härtung der Füllerlackschicht, wodurch die Füllerschicht resultiert,
(III) Herstellen einer Basislackschicht durch Applikation des erfindungsgemäßen Wasserbasislacks auf die Füllerschicht,
(IV) Trocknen der Basislackschicht,
(V) Herstellen einer Klarlackschicht durch Applikation eines Klarlacks auf die Basislackschicht und
(VI) gemeinsame Härtung der Basislackschicht und der Klarlackschicht, wodurch die Basislackiezung und die Klarlackierung resultieren (Naß-in-naß-Verfahren).

Eine dritte bevorzugte Variante des erfindungsgemäßen Verfahrens umfaßt die Verfahrensschritte:
(I) Herstellen einer Füllerlackschicht durch Applikation eines Füllers auf das Substrat,
(II) Trocknung der Füllerlackschicht,
(III) Herstellen einer Basislackschicht durch Applikation des erfindungsgemäßen Wasserbasislacks auf die Füllerlackschicht,
(IV) Trocknen der Basislackschicht,
(V) Herstellen einer Klarlackschicht durch Applikation eines Klarlacks auf die Basislackschicht und
(VI) gemeinsame Härtung der Füllerlackschicht, der Basislackschicht und der Klarlackschicht, wodurch der Füller, die Basislackierung und die Klarlackierung resultieren (erweitertes Naß-in-naß-Verfahren).

Eine vierte bevorzugte Variante des erfindungsgemäßen Verfahrens umfaßt die Verfahrensschritte:
(I) Abscheiden einer Elektrotauchackschicht auf dem Substrat,
(II) Trocknen der Elektrotauchlackschicht,
(II) Herstellen einer ersten Basislackschicht durch Applikation eines ersten Basislacks auf der Elektrotauchlackschicht,
(III) gemeinsame Härtung der Elektrotauchlackschicht und der ersten Basislackschicht, wodurch die Elektrotauchlackierung und die erste Basislackierung resultieren (naß-in-naß-Verfahren,
(IV) Herstellen einer zweiten Basislackschicht durch Applikation eines zweiten Basislacks auf die erste Basislackierung,
(V) Trocknen der zweiten Basislackschicht,
(VI) Herstellen einer Klarlackschicht durch Applikation eines Klarlacks auf die Basislackschicht und
(VII) gemeinsame Härtung der zweiten Basislackschicht und Klarlackschicht, wodurch die zweite Basislackierung und die Klarlackierung resultieren (naß-in-naß-Verfahren).

Die drei letzgenaunten Varianten bieten insbesondere bei der Lackierung von Automobilkarosserien besondere Vorteile und werden deshalb hier ganz besonders bevorzugt angewandt.

Es ist ein weiterer besonderer Vorteil des erfindungsgemäßen Wasserbasislacks und der erfindungsgemäßen Verfahren, daß der Wasserbasislack außer mit dem erfindungsgemäßen Füller auch mit allen üblichen und bekannten Füllern kombiniert werden kann.

Als noch ein weiterer besonderer Vorteil des erfindungsgemäßen Wasserbasislacks und des erfindungsgemäßen Verfahrens erweist sich, daß der Wasserbasislack nicht nur hervorragend mit dem erfindungsgemäßen Klarlack, sondern auch mit sämtlichen üblichen und bekannten Klarlacken kombiniert werden kann.

An sich bekannte Klarlacke sind Ein- oder Mehrkomponentenklarlacke, Pulverklarlacke, Pulverslurryklarlacke, UV-härtbare Klarlacke oder Sealer, wie sie aus den Patentanmeldungen, Patentschriften und Veröffentlichungen DE 42 04 518 A 1, EP 0 594 068 A 1, EP 0 594 071 A 1, EP 0 594 142 A 1,EP0604992A 1, EP 0 596 460 A 1, WO 94/10211, WO 94/10212, WO 94/10213, WO 94/22969 oder WO 92/22615, US 5,474,811 A 1, US 5,356,669 A 1 oder US 5,605,965 A 1, DE 42 22 194 A 1, der Produkt-Information der Firma BASF Lacke + Farben AG, "Pulverlacke", 1990, der Firmenschrift von BASF Coatings AG "Pulverlacke, Pulverlacke für industrielle Anwendungen", Januar 2000, US 4,268,542 A 1, DE 195 40 977 A 1, DE 195 18 392 A 1, DE 196 17 086 A 1, DE-A-196 13 547, DE 196 52 813 A 1, DE-A-198 14 471 A 1, EP 0 928 800 A 1, EP 0 636 669 A 1, EP 0 410 242 A 1, EP 0 783 534 A 1, EP 0 650 978 A 1, EP 0 650 979 A 1, EP 0 650 985 A 1, EP 0 540 884 A 1, EP 0 568 967 A 1, EP 0 054 505 A 1, EP 0 002 866 A 1, DE 197 09 467 A 1, DE 42 03 278 A 1, DE 33 16 593 A 1, DE 38 36 370 A 1, DE 24 36 186 A 1, DE 20 03 579 B 1, WO 97/46549, WO 99/14254, US 5,824,373 A 1, US 4,675,234 A 1, US 4,634,602 A 1, US 4,424,252 A 1, US 4,208,313 A 1, US 4,163,810 A 1, US 4,129,488 A1, US 4,064,161 A 1, US 3,974,303 A 1, EP 0 844 286 A 1, DE 43 03 570 A 1, DE 34 07 087 A 1, DE 40 11 045 A 1, DE 40 25 215 A 1, DE 38 28 098 A 1, DE 40 20 316 A 1 oder DE 41 22 743 A 1 bekannt sind.

Pulverslurry-Klarlacke bieten für die erfindungsgemäße farb- und/oder effektgebende Mehrschichtlackierung besondere Vorteile und werden deshalb erfindungsgemäß besonders bevorzugt verwendet.

Darüber hinaus können die Klarlackierungen noch zusätzlich mit mindestens einer weiteren Klarlackierung, beispielsweise einer organisch modifizierten Keramikschicht, beschichtet sein, wodurch die Kratzfestigkeit der erfindungsgemäßen Mehrschichtlackierung signifikant verbessert werden kann.

Die Applikation des erfindungsgemäßen Wasserbasislacks kann durch alle üblichen Applikationsmethoden, wie z.B. Spritzen, Rakeln, Streichen, Gießen, Tauchen, Tränken, Träufeln oder Walzen erfolgen. Dabei kann das zu beschichtende Substrat als solches ruhen, wobei die Applikationseinrichtung oder -anlage bewegt wird. Indes kann auch das zu beschichtende Substrat, insbesondere ein Coil, bewegt werden, wobei die Applikationsanlage relativ zum Substrat ruht oder in geeigneter Weise bewegt wird.

Vorzugsweise werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heißspritzapplikation wie zum Beispiel Hot-Air ― Heißspritzen. Die Applikationen kann bei Temperaturen von max. 70 bis 80 °C durchgeführt werden, so daß geeignete Applikationsviskositäten erreicht werden, ohne daß bei der kurzzeitig einwirkenden thermischen Belastung eine Veränderung oder Schädigungen des Wasserbasislacks und seines gegebenenfalls wiederaufzubereitenden Overspray eintreten. So kann das Heißspritzen so ausgestaltet sein, daß der Wasserbasislack nur sehr kurz in der oder kurz vor der Spritzdüse erhitzt wird.

Die für die Applikation verwendete Spritzkabine kann beispielsweise mit einem gegebenenfalls temperierbaren Umlauf betrieben werden, der mit einem geeigneten Absorptionsmedium für den Overspray, z. B. dem Wasserbasislack selbst, betrieben wird.

Im allgmeinen werden die Füllerlackschicht, Basislackschicht und Klarlackschicht in einer Naßschichtdicke appliziert, daß nach ihrer Aushärtung Schichten mit der für ihre Funktionen notwendigen und vorteilhaften Schichtdicken resultieren. Im Falle der Füllerschicht liegt diese Schichtdicke bei 10 bis 150, vorzugsweise 10 bis 120, besonders bevorzugt 10 bis 100 und insbesondere 10 bis 90 µm, im Falle der Basislackierung liegt sie bei 5 bis 50, vorzugsweise 5 bis 40, besonders bevorzugt 5 bis 30 und insbesondere 10 bis 25 µm, und im Falle der Klarlackierungen liegt sie bei 10 bis 100, vorzugsweise 15 bis 80, besonders bevorzugt 20 bis 70 und insbesondere 25 bis 60 µm. Es kann aber auch der aus der europäischen Patentanmeldung EP 0 817 614 A 1 bekannte Mehrschichtaufbau aus einer Elektrotauchlackierung, einer ersten Basislackierung, einer zweiten Basislackierung und einer Klarlackierung angewandt werden, worin die Gesamtschichtdicke der ersten und zweiten Basislackierung bei 15 bis 40 µm liegt und die Schichtdicke der ersten Basislackierung 20 bis 50% der besagten Gesamtschichtdicke beträgt.

Die Füllerlackschicht, Basislackschicht und Klarlackschicht werden thermisch oder thermisch und mit aktinischer Strahlung (Dual Cure) gehärtet.

Die Aushärtung kann nach einer gewissen Ruhezeit erfolgen. Sie kann eine Dauer von 30 s bis 2 h, vorzugsweise 1 min bis 1 h und insbesondere 1 min bis 45 min haben. Die Ruhezeit dient beispielsweise zum Verlauf und zur Entgasung der Lackschichten oder zum Verdunsten von flüchtigen Bestandteilen wie Lösemittel. Die Ruhezeit kann durch die Anwendung erhöhter Temperaturen bis 90 °C und/oder durch eine reduzierte Luftfeuchte < 10g Wasser/kg Luft, insbesondere < 5g/kg Luft, unterstützt und/oder verkürzt werden, sofern hierbei keine Schädigungen oder Veränderungen der Lackschichten eintreten, etwa eine vorzeitige vollständige Vernetzung.

Die thermische Härtung weist keine methodischen Besonderheiten auf, sondern erfolgt nach den üblichen und bekannten Methoden wie Erhitzen in einem Umluftofen oder Bestrahlen mit IR-Lampen. Hierbei kann die thermische Härtung auch stufenweise erfolgen.

Vorteilhafterweise erfolgt die thermische Härtung bei einer Temperatur von 50 bis 100 °C, besonders bevorzugt 60 bis 100 °C und insbesondere 80 bis 100 ° C während einer Zeit von 1 min bis zu 2 h, besonders bevorzugt 2 min bis zu 1 h und insbesondere 3 min bis 45 min. Dieses Verfahren wird insbesondere bei Zwei- oder Mehrkomponentensystemen angewandt.

Werden Einkomponentensysteme und Substrate verwendet, welche thermisch stark belastbar sind, kann die thermische Vernetzung auch bei Temperaturen oberhalb 100 °C durchgeführt werden. Im allgemeinen empfiehlt es sich, hierbei Temperaturen von 180 °C, vorzugsweise 160 °C und insbesondere 155 °C nicht zu überschreiten.

Vorzugsweise wird die Härtung mit aktinischer Strahlung mit UV-Strahlung und/oder Elektronenstrahlen durchgeführt. Vorzugsweise wird hierbei eine Dosis von 1.000 bis 3.000, bevorzugt 1.100 bis 2.900, besonders bevorzugt 1.200 bis 2.800, ganz besonders bevorzugt 1.300 bis 2.700 und insbesondere 1.400 bis 2.600 mJ/cm² angewandt. Gegebenenfalls kann diese Härtung mit aktinischer Strahlung von anderen Strahlenquellen ergänzt werden. Im Falle von Elektronenstrahlen wird vorzugsweise unter Inertgasatmosphäre gearbeitet. Dies kann beispielsweise durch Zuführen von Kohlendioxid und/oder Stickstoff direkt an die Oberfläche der Lackschichten gewährleistet werden. Auch im Falle der Härtung mit UV-Strahlung kann, um die Bildung von Ozon zu vermeiden, unter Inertgas gearbeitet werden.

Für die Härtung mit aktinischer Strahlung werden die üblichen und bekannten Strahlenquellen und optischen Hilfsmaßnahmen angewandt. Beispiele geeigneter Strahlenquellen sind Blitzlampen der Firma VISIT, Quecksilberhoch- oder ― niederdruckdampflampen, welche gegebenenfalls mit Blei dotiert sind, um ein Strablenfenstar bis zu 405 nm zu öffnen, oder Elektronenstrahlquellen. Deren Anordnung ist im Prinzip bekannt und kann den Gegebenheiten des Werkstücks und der Verfahrensparameter angepaßt werden. Bei kompliziert geformten Werkstücken, wie sie für Automobilkarosserien vorgesehen sind, können die nicht direkter Strahlung zugänglichen Bereiche (Schattenbereiche) wie Hohlräume, Falzen und anderen konstruktionsbedingte Hinterschneidungen mit Punkt-, Kleinflächen- oder Rundumstrahlern verbunden mit einer automatischen Bewegungseinrichtung für das Bestrahlen von Hohlräumen oder Kanten (partiell) ausgehärtet werden.

Die Anlagen und Bedingungen dieser Härtungsmethoden werden beispielsweise in R. Holmes, U.V. and E.B. Curing Formulations for Printing Inks, Coatings and Paints, SITA Technology, Academic Press, London, United Kindom 1984, beschrieben.

Hierbei kann die Aushärtung stufenweise erfolgen, d. h. durch mehrfache Belichtung oder Bestrahlung mit aktinischer Strahlung. Dies kann auch alternierend erfolgen, d. h., daß abwechselnd mit UV-Strahlung und Elektronenstrahlung gehärtet wird.

Werden die thermische Härtung und Härtung mit aktinischer Strahlung zusammen angewandt, können diese Methoden gleichzeitig oder alternierend eingesetzt werden. Werden die beiden Härtungsmethoden alternierend verwendet, kann beispielsweise mit der thermischen Härtung begonnen und mit der Härtung mit aktinischer Strahlung geendet werden. In anderen Fällen kann es sich als vorteilhaft erweisen, mit der Härtung mit aktinischer Strahlung zu beginnen und hiermit zu enden. Besondere Vorteile resultieren, wenn die Wasserbasislackschicht in zwei getrennten Verfahrensschritten zuerst mit aktinischer Strahlung und anschließend thermisch gehärtet wird.

Die vorstehend beschriebenen Applikations- und Härtungsverfahren werden auch bei den anderen Lackschichten (Füllerschichten, Unidecklackschichten, Klarlackschichten) sowie bei den erfindungsgemäßen Klebstoffen und Dichtungsmassen angewandt.

Die erfindungsgemäßen Mehrschichtlackierungen weisen ein hervorragendes Eigenschaftsprofil auf, das hinsichtlich der Mechanik, Optik, Korrosionsbeständigkeit und Haftung sehr gut ausgewogen ist. So weisen die erfindungsgemäßen Mehrschichtlackierungen die vom Markt geforderte hohe optische Qualität und Zwischenschichthaftung auf und werfen keine Probleme wie mangelnde Schwitzwasserbeständigkeit, Rißbildung (mudcracking) oder Verlaufsstörungen oder Oberflächenstrukturen in den Klarlackierungen auf.

Insbesondere weisen die erfindungsgemäße Mehrschichtlackierungen einen hervorragenden Metallic-Effekt, einen hervorragenden D.O.I. (distinctiveness of the reflected image) und eine hervorragende Oberflächenglätte, auf. Sie sind witterungsstabil, resistent gegenüber Chemikalien und Vogelkot und kratzfest und zeigen ein sehr gutes Reflow-Verhalten.

Nicht zuletzt erweist es sich aber als ganz besonderer Vorteil, daß durch die Verwendung der erfindungsgemäßen Wasserbasislacke bei der Herstellung der erfindungsgemäßen Mehrschichtlackierungen selbst dann keine Rißbildung oder Kocher mehr resultieren, wenn die Wasserbasislackschichten mit Pulverslurry-Klarlacken überschichtet und hiernach gemeinsam mit diesen eingebrannt werden. Hierdurch ist es möglich, die besonderen Vorteile von Wasserbasislacken mit den besonderen Vorteilen von Pulverslurry-Klarlacken zu kombinieren. Darüber hinaus erweisen sich gerade diese erfindungsgemäßen Mehrschichtlackierungen als besonders haftfest auch in ihrer Verwendung als Reparaturlackierungen.

Die erfindungsgemäßen Klebstoffe und Dichtungsmassen eignen sich hervorragend für die Herstellung von Klebschichten und Dichtungen, die auch unter klimatisch extremen und/oder rasch wechselnden klimatischen Bedingungen auf Dauer von besonders hoher Klebkraft und und besonders hohem Dichtungsvermögen sind.

Demzufolge weisen die erfindungsgemäßen grundierten oder ungrundierten Substrate, die mit mindestens einer erfindungsgemäßen Beschichtung beschichtet, mit mindestens einer erfindungsgemäßen Klebschicht verklebt und/oder mit mindestens einer erfindungsgemäßen Dichtung abgedichtet sind, bei einem besonders vorteilhaften anwendungstechnischen Eigenschaftsprofil eine besonders lange Gebrauchsdauer auf, was sie wirtschaftlich besonders wertvoll macht.

### Beispiele und Vergleichsversuche

### Beispiel 1

### Die Herstellung eines erfindungsgemäßen Polyurethans

In einem Reaktionsgefäß, ausgerüstet mit Rührer, Innenthermometer, Rückflußkühler und elektrischer Heizung, wurden 701 Gewichtsteile eines linearen Polyesterpolyols (hergestellt aus dimerisierter Fettsäure (Pripol®1013), Isophthalsäure und Hexan-1,6-diol) mit einer Hydroxylzahl von 80 und einem zahlenmittleren Molekulargewicht von 1.400 Dalton, 41,5 Gewichtsteile Vinylcyclohexandiol und 99,7 Gewichtsteile Dimethylolpropionsäure in 404 Gewichtsteilen Methylethylketon und 123 Gewichtsteilen N-Methylpyrrolidon gelöst. Zu der resultierenden Lösung wurden bei 45°C 388,8 Gewichtsteile Isophorondiisocyanat hinzugegeben. Nach dem Abklingen der exothermen Reaktion wurde die Reaktionsmischung unter Rühren langsam auf 80°C erwärmt. Es wurde bei dieser Temperatur weiter gerührt, bis der Isocyanatgehalt 1,1 Gew.-% betrug und konstant war. Danach wurde die Reaktionsmischung auf 60°C abgekühlt, und es wurden 36,7 Gewichtsteile Diethanolamin hinzugegeben. Die resultierende Reaktionsmischung wurde so lange bei 60°C gerührt, bis keine freien Isocyanatgruppen mehr nachweisbar waren. Das resultierende gelöste Polyurethan wurde mit 137 Gewichtsteilen Methoxypropanol und 55 Gewichtsteilen Triethylamin versetzt. 30 Minuten nach der Aminzugabe wurden während 30 Minuten 1.500 Gewichtsteile deionisiertes Wasser unter Rühren hinzugegeben. Aus der resultierenden Dispersion wurde das Methylethylketon bei 60 °C unter Vakuum abdestilliert. Hiernach wurden eventuelle Lösemittel- und Wasserverluste ausgeglichen. Die so erhaltene Dispersion des erfindungsgemäßen Polyurethans wurde auf einen Feststoffgehalt von 35,1 Gew.-% (eine Stunde bei 130 °C) und einen pH-Wert 7,3 eingestellt.

### Beispiel 2

### Die Herstellung einer erfindungsgemäßen Primärdispersion eines Pfropfmischpolymerisats

1.487,2 Gewichtsteile der Polyurethandispersion gemäß Beispiel 1 wurden mit 864,4 Gewichtsteilen deionisiertem Wasser verdünnt und auf 85°C erhitzt. Bei dieser Temperatur wurde der Dispersion unter Rühren ein Gemisch aus 150,2 Gewichtsteilen Styrol, 150,2 Gewichtsteilen Methylmethacrylat, 112,4 Gewichtsteilen n-Butylacrylat und 112,4 Gewichtsteilen Hydroxyethylmethacrylat während 3,5 Stunden gleichmäßig zugegeben. Mit Beginn der Zugabe der Monomerenmischung wurde eine Lösung von 7,9 Gewichtsteilen tert.-Butylperoxyethylhexanoat in 115,5 Gewichtsteilen Methoxypropanol innerhalb von vier Stunden zugegeben. Das Gewichtsverhältnis Polyurethan zu Monomeren lag bei 1 : 1. Die resultierende Reaktionsmischung wurde bei 85°C so lange weiter gerührt, bis alle Monomeren abreagiert waren. Die resultierende Primärdispersion des Pfropfmischpolymerisats wies eine sehr gute Lagerstabilität auf. Ihr Feststoffgehalt lag bei 35,7 Gew.-% (eine Stunde bei 130°C) und ihr pH-Wert bei 7,2.

### Vergleichsversuch V1

### Die Herstellung eines bekannten, laterale Vinylgruppen enthaltenden Polyurethans

Ein hydroxylgruppenhaltiger Polyester wurde gemäß der in der Patentschrift EP 0 608 021 A 1, Seite 6, Zeilen 22 bis 37 (intermediate A) hergestellt. Hierzu wurde in einem geeigneten Reaktionsgefäß ein Gemisch aus 236 Gewichtsteilen Hexan-1,6-diol, 208 Gewichtsteilen Neopentylglykol, 616 Gewichtsteilen Hexahydrophthalsäureanhydrid und 6 Gewichtsteilen Benzyltriphenylphosphoniumchlorid vorgelegt und unter Stickstoff unter Rühren auf 120°C erhitzt. Nach einer Stunde bei dieser Temperatur wurde die Reaktionsmischung auf 140°C erhitzt. Hiernach wurden während zwei Stunden 1.000 Gewichtsteile des Glycidylesters von 1,1-Dimethyl-1-heptancarbonsäure (Cardura® E-10 der Firma Shell) zudosiert. Nach vier Stunden wies die Reaktionsmischung eine Säurezahl von 8,5 mg KOH/g auf. Es wurden noch einmal 80 Gewichtsteile Cardura® E-10 hinzugegeben. Nach weiteren zwei Stunden lag die Säurezahl der Reaktionsmischung unter 1 mg KOH/g.

Nach der auf Seite 7, Zeilen 1 bis 27 (Example I), der Patentschrift EP 0 608 021 A 1 angegebenen Vorschrift wurden 261,6 Gewichtsteile des vorstehend beschriebenen Polyesters, 55 Gewichtsteile N-Methylpyrrolidon und 0,1 Gewichtsteile Dibutylzinndiacetat vorgelegt. Zu dieser Mischung wurden während einer Stunde bei 90 °C 72,1 Gewichtsteile Isophorondiisocyanat zudosiert. Nach zwei Stunden bei 90°C wurde die Reaktionsmischung auf 100°C erhitzt. Bei dieser Temperatur wurden 16,3 Gewichtsteile 1-(1-Isocyanato-1-methylethyl)-3-(1-methylethenyl)-benzol (TMI® der Firma Cytec) während 15 Minuten hinzudosiert. Die resultierende Reaktionsmischung wurde während einer Stunde bei 100°C gehalten.

Hiernach wurde die Reaktionsmischung auf 130°C erhitzt, und es wurde bei dieser Temperatur unter Rühren und unter Stickstoff während einer Stunde eine Mischung aus 38,2 Gewichtsteilen Styrol, 9,2 Gewichtsteilen Methylmethacrylat, 33,1 Gewichtsteilen Acrylsäure, 66 Gewichtsteilen Cardura® E-10, 2,7 Gewichtsteilen Dicumylperoxid, 0,8 Gewichtsteilen 3-Mercaptopropionsäure und 51,9 Gewichtsteilen 2-Butoxyethanol hinzugegeben. Die resultierende Reaktionsmischung wurde während drei Stunden bei dieser Temperatur gehalten. Danach wurden bei 115°C 18,1 Gewichtsteile Dimethylethanolamin zudosiert. Nach dem Abkühlen auf 90°C wurden 782 Gewichtsteile deionisiertes Wasser unter Rühren während drei Stunden tropfenweise zudosiert, wodurch eine Sekundärdispersion mit einem Feststoffgehalt von 35,8 Gew.-% resultierte.

### Beispiel 3 und Vergleichsversuche V2 und V3

### Die Herstellung eines erfindungsgemäßen Wasserbasislacks (Beispiel 3) und nicht erfindungsgemäßer Wasserbasislacke (Vergleichsversuche V2 und V3)

Für das erfindungsgemäße Beispiel 3 wurden in einem Mischgefäß 9,5 Gewichtsteile deionisiertes Wasser vorgelegt. Unter Rühren wurden 10,5 Gewichtsteile einer wäßrigen Acrylatdispersion [Komponente (i) gemäß der Patentschrift DE 197 36 535 A 1; Acronal® 290 D der Firma BASF Aktiengesellschaft], 13,5 Gewichtsteile der erfindungsgemäßen Primärdispersion gemäß Beispiel 2, 10,4 Gewichtsteile des Verdickungsmittels 1 (Paste eines synthetischen Natrium-Magnesium-Schichtsilikats der Firma Laporte, 3%ig in Wasser), 8,0 Gewichtsteile deionisiertes Wasser, 0,28 Gewichtsteile einer 15 %igen wäßrigen Ammoniaklösung und 18,0 Gewichtsteile des Verdickungsmittels 2 (3%ige wäßrige Lösung eines Polyacrylsäureverdickers der Firma Allied Colloids) zugegeben.

Anschließend wurden unter Rühren 4,2 Gewichtsteile einer Pigmentpaste mit einem Rußgehalt von 10 Gew.-% und einem Gehalt an der acrylierten Polyurethandispersion gemäß dem Beispiel D der Patentschrift DE 44 37 535 A 1 von 60 Gew.-%, 10,2 Gewichtsteile einer Füllstoffpaste mit einem Aerosilgehalt von 10 Gew.-% und einem Gehalt an der acrylierten Polyurethandispersion gemäß dem Beispiel D der Patentschrift DE 44 37 535 A 1 von 50 Gew.-%, 2,0 Gewichtsteile Butylglykol und 3,5 Gewichtsteile eines mit Methanol und Butanol veretherten Melaminharzes der Firma CYTEC hinzugefügt.

In einem separaten Mischgefäß wurde eine Mischung aus 0,4 Gewichtsteilen einer handelsüblichen Aluminiumbronze (Alu-Stapa Hydrolux® der Firma Eckart, Al-Gehalt 65 Gew.-%) und 0,6 Gewichtsteilen Butylglykol verrührt. Anschließend wurde diese Mischung der anderen Mischung unter starkem Rühren portionsweise hinzugefügt.

In einem weiteren separaten Mischer wurden 1,3 Gewichtsteile eines Perlglanzpigments (Iriodin® 9103 Sterling Silber WR der Firma Merck) und 2,3 Gewichtsteile Butylglykol gemischt. Anschließend wurde diese Mischung der vorstehend beschriebenen unter starkem Rühren portionsweise hinzugegeben.

Die Tabelle 1 gibt einen Überblick über die Zusammensetzung des erfindungsgemäßen Wasserbasislacks gemäß Beispiel 3.

Für den Vergleichsversuch V2 wurde das Beispiel 3 wiederholt, nur daß anstelle der erfindungsgemäßen Primärdispersion gemäß Beispiel 2 die wäßrige Polyurethanharzdispersion gemäß Beispiel 1 der Patentschrift DE 43 39 870 A 1 [Komponente (ii)] verwendet wurde.

Für den Vergleichsversuch V3 wurde das Beispiel 3 wiederholt, nur das anstelle der erfindungsgemäßen Primärdispersion gemäß Beispiel 2 die bekannte Sekundärdispersion gemäß dem Vergleichsversuch V1 verwendet wurde. Die stoffliche Zusammensetzung der nicht erfindungsgemäßen Wasserbasislacke V3 und V2 findet sich ebenfalls in der Tabelle 1.

**Tabelle 1:**

| **Die Zusammensetzung des erfindungsgemäßenWasserbasislacks (Beispiel 3) und der nicht erfindungsgemäßen Wasserbasislacke (Vergleichsversuch V2 und V3)** | | | |
|---|---|---|---|
| **Bestandteile** | **Vergleichsversuche:** | | **Beispiel:** |
| | **V2** | **V3** | **3** |
| Deionisiertes Wasser | 9,5 | 9,5 | 9,5 |
| Komponente (i) | 10,5 | 10,5 | 10,5 |
| Komponente (ii) | 13,5 | - | - |
| Sekundärdispersion V1 | - | 13,5 | - |
| Primärdispersion (Bsp. 2) | - | - | 13,5 |
| Verdickungsmittel 1 | 10,4 | 10,4 | 10,4 |
| Deionisiertes Wasser | 8,0 | 8,0 | 8,0 |
| Ammoniaklösung | 0,28 | 0,28 | 0,28 |
| Verdickungsmittel 2 | 18,0 | 18,0 | 18,0 |
| Pigmentpaste | 4,2 | 4,2 | 4,2 |
| Füllstoffpaste | 10,2 | 10,2 | 10,2 |
| Butylglykol | 2,0 | 2,0 | 2,0 |
| Melaminharz | 3,5 | 3,5 | 3,5 |
| Aluminiumpaste | 0,4 | 0,4 | 0,4 |
| Butylglykol | 0,6 | 0,6 | 0,6 |
| Iriodin 9103 | 1,3 | 1,3 | 1,3 |
| Butylglykol | 2,3 | 2,3 | 2,3 |

Die Viskosität der Wasserbasislacke der Tabelle 1 wurde mit deionisiertem Wasser auf 90 bis 95 mPas bei einer Scherrate von 1.000/s eingestellt.

### Beispiel 4 und Vergleichsversuche V4 und V5

### Die Herstellung einer erfindungsgemäßen Mehrschichtlackierung (Beispiel 4) und von nicht erfindungsgemäßen Mehrschichtlackierungen (Vergleichsversuche V4 und V5)

Für die Herstellung der erfindungsgemäßen Mehrschichtlackierung des Beispiels 4 wurde der erfindungsgemäße Wasserbasislack des Beispiels 3 (vgl. Tabelle 1) verwendet.

Für die Herstellung der nicht erfindungsgemäßen Mehrschichtlackierung des Vergleichsversuchs V4 wurde der nicht erfindungsgemäße Wasserbasislack des Vergleichsversuchs V2 (vgl. Tabelle 1) verwendet.

Für die Herstellung der nicht erfindungsgemäßen Mehrschichtlackierung des Vergleichsversuchs V5 wurde der nicht erfindungsgemäße Wasserbasislack des Vergleichsversuchs V3 (vgl. Tabelle 1) verwendet.

### A. Die Herstellung der Prüftafeln:

Für das Beispiel 4 und die Vergleichsversuche V4 und V5 wurden zunächst Prüftafeln hergestellt. Hierzu wurden Stahltafeln (Karosseriebleche), die mit einer üblichen und bekannten kathodisch abgeschiedenen und eingebrannten Elektrotauchlackierung beschichtet waren, mit einem handelsüblichen Dünnschichtfüller (Ecoprime® 60 der Firma BASF Coatings AG; anthrazitfarben) beschichtet, wonach die resultierende Füllerschicht während fünf Minuten bei 20°C und einer relativen Luftfeuchtigkeit von 65% abgelüftet und in einem Umluftofen während fünf Minuten bei 80°C getrocknet wurde. Hiernach wies die Füllerschicht eine Trockenschichtdicke von 15 µm auf.

Nach dem Abkühlen der Prüftafeln auf 20°C wurden die Wasserbasislacke der Tabelle 1 appliziert, während fünf Minuten bei 20°C und einer relativen Luftfeuchtigkeit von 65% abgelüftet und in einem Umluftofen während fünf Minuten bei 80°C getrocknet, so daß die getrockneten Basislackschichten eine Trockenschichtdicke von etwa 15 µm aufwiesen.

Nach dem erneuten Abkühlen der Prüftafeln auf 20°C wurden die Basislackschichten mit einem Pulverslurry-Klarlack gemäß der internationalen Patentanmeldung WO 96/32452 überschichtet. Die resultierende Pulverslurry-Klarlackschichten wurden während 3 Minuten bei 20°C und einer relativen Luftfeuchtigkeit von 65% abgelüftet, und in einem Umluftofen während fünf Minuten bei 55°C getrocknet. Die Trockenschichtdicke der resultierenden Klarlackschichten lag bei 50 bis 60 µm.

Nach der Applikation aller drei Schichten wurden sie gemeinsam während 30 Minuten bei 155°C eingebrannt, wodurch die erfindungsgemäße Mehrschichtlackierung des Beispiels 4 und die nicht erfindungsgemäßen Mehrschichtlackierungen der Vergleichsversuche V4 und V5 resultierten.

### B. Die Herstellung von Reparaturlackierungen:

Zur Simulation der Reparaturlackierung der gesamten Karosserie in der Linie (Serienreparatur) wurden die Prüftafeln gemäß dem Beispiel 4 und den Vergleichsversuche V4 und V5 mit einem Schleifpapier mit 1.200-Körnung angeschliffen und gemäß der vorstehend beschriebenen Vorschrift noch einmal mit der jeweils gleichen Mehrschichtlackierung beschichtet (Doppellackierung).

### C. Die Bestimmung der Kochergrenze und Rißbildungsgrenze (mud cracking):

Nach der in dem vorstehenden Abschnitt A. angegebenen Vorschrift wurden Mehrschichtlackierungen hergestellt, bei denen die Basislackierungen im Keil von 3 bis 40µm aufgetragen wurden. Die Klarlackierungen wiesen eine Schichtdicke von 55 bis 57 µm auf. Die Rißbildungsgrenze und die Kochergrenze geben die Schichtdicke an, ab der Oberflächenstörungen (hier Kocher und Rißbildung = mud cracking) in der Klarlackierung auftreten. Die Rißbildungsgrenze und die Kochergrenze sind ein Maß für die Verträglichkeit des Wasserbasislacks mit dem Klarlack bzw. der Basislackierung mit der Klarlackierung: je höher die Rißbildungsgrenze oder die Kochergrenze, desto besser die Verträglichkeit. Die entsprechenden Versuchsergebnisse finden sich in der Tabelle 2.

### D. Die Prüfung der Klarlackhaftung:

Die Prüfung der Klarlackhaftung wurde an unbelasteten Prüftafeln [vgl. den vorstehenden Abschnitt A. (Erstlackierung) und den vorstehenden Abschnitt B. (Reparaturlackierung)] nach drei Tagen Lagerung bei Raumtemperatur durchgeführt. Zu diesem Zweck wurden die Mehrschichtlackierungen mit einem Messer oder einem spitzen Dorn bis auf die Stahloberfläche geritzt. Anschließend wurden die Ritze während einer Minute unter Hochdruck mit Wasser bestrahlt (Hochdruckreiniger der Firma Kärcher), wobei der Wasserdruck 230 bar, die Wassertemperatur 20°C und der Abstand der rotierenden Spritzdüse zu den Prüftafeln 6cm betrug. Die Beurteilung erfolgte visuell: zeigte die Mehrschichtlackierung keine Beschädigung, wurde sie mit "in Ordnung" (i.o.) beurteilt. Fand eine Delamination statt, wurde dies mit "nicht in Ordnung" (n.i.o.) beurteilt. Die Versuchsergebnisse finden sich ebenfalls in der Tabelle 2.

### E. Die Prüfung der Zwischenschichthaftung nach der Kugelschußprüfung:

Die Kugelschußprüfung wurde entsprechend der in der Fachwelt allgemein bekannten Daimler Chrysler- Spezifikation durchgeführt. Die entsprechenden Ergebnisse finden sich ebenfalls in der Tabelle 2.

### F. Die Prüfung der Zwischenschichthaftung nach der Belastung im Schwitzwasserkonstantklima nach DIN 50017:

Die nach der in Abschnitt A. angegebenen Vorschrift hergestellten Prüftafeln wurden dem Schwitzwasserkonstantklima nach DIN 50017 ausgesetzt. Hiernach wurde die Zwischenschichthaftung mit dem Gitterschnittest nach DIN EN ISO 2409 nach 0 und 2 Stunden Regeneration bestimmt. Die Versuchsergebnisse finden sich ebenfalls in der Tabelle 2.

**Tabelle 2:**

| **Die Ergebnisse der Prüfungen gemäß den Abschnitten C. bis F.** | | | |
|---|---|---|---|
| **Prüfungen** | **Vergleichsversuche:** | | **Beispiel:** |
| | **V4** | **V5** | **4** |
| Abschnitt C.: | | | |
| Rißbildungsgrenze (µm): | 28 | 12 | 36 |
| Kochergrenze (µm): | 23 | 13 | 29 |

| Abschnitt D.: | | | |
|---|---|---|---|
| Wasserstrahltest: | n.i.o.¹⁾ | n.i.o.¹⁾ | i.o. |

| Abschnitt E.: | | | |
|---|---|---|---|
| Kugelschußprüfung: | | | |
| Erstlackierung | 6/0 | 12/0 | 6/0 |
| Reparaturlackierung | 16/0 | 35/0 | 14/0 |

| Abschnitt F.: | | | |
|---|---|---|---|
| Gitterschnitttest: | | | |
| Nach 0 Stunden Regeneration | GT0 | GT3 | GT0 |
| Nach 2 Stunden Regeneration | GT0 | GT1-2 | GT0 |

### 1) großflächige Klarlackdelamination

Die Ergebnisse der Tabelle 2 belegen, daß der erfindungsgemäße Wasserbasislack gemäß Beispiel 3 und die erfindungsgemäße Mehrschichtlackierung gemäß Beispiel 4 den nicht erfindungsgemäßen Wasserbasislacken gemäß den Vergleichsversuchen V2 und V3 und den nicht erfindungsgemäßen Mehrschichtlackierungen gemäß den Vergleichsversuchen V4 und V5 hinsichtlich der Verträglichkeit von Wasserbasislack und Pulverslurry-Klarlack und der Zwischenschichthaftung eindeutig überlegen waren. Des weiteren wird untermauert, daß der nicht erfindungsgemäße Wasserbasislack V3 nicht mit dem Pulverslurry-Klarlack verträglich ist und die hiermit hergestellte nicht erfindungsgemäße Mehrschichtlackierung V5 auch eine sehr schlechte Einzelschlagbeständigkeit aufweist.

## Patentansprüche

1. Hydrophiles oder hydrophobes Polyurethan mit mindestens einer seitenständigen und/oder mindestens einer endständigen olefinisch ungesättigten Gruppe, worin
1. die seitenständige olefinisch ungesättigte Gruppe
1.1 an eine cycloaliphatische Gruppe gebunden ist, die ein Glied der Polymerhauptkette darstellt, oder
1.2 als Doppelbindung in einer cycloolefinischen Gruppe vorliegt, die ein Glied der Polymerhauptkette darstellt, und
2. die endständige olefinisch ungesättigte Gruppe
2.1 an eine cycloaliphatische Gruppe gebunden ist, die eine Endgruppe der Polymerhauptkette bildet, oder
2.2 als Doppelbindung in einer cycloolefinischen Gruppe vorliegt, die eine Endgruppe der Polymerhauptkette bildet.

2. Polyurethan nach Anspruch 1, **dadurch gekennzeichnet, daß** es sich bei den olefinisch ungesättigten Gruppen, die an die cycloaliphatischen Gruppen gebunden sind, um (Meth)Acrylat-, Ethacrylat-, Crotonat-, Cinnamat-, Vinylether-, Vinylester-, Vinyl-, Dicyclopentadienyl-, Norbornenyl-, Isoprenyl-, Isopropenyl-, Allyl- und/oder Butenylgruppen; Dicyclopentadienyl-, Norbornenyl-, Isoprenyl-, Isopropenyl-, Allyl- oder Butenylethergruppen und/oder Dicyclopentadienyl-, Norbornenyl-, Isoprenyl-, Isopropenyl-, Allyl- und/oder Butenylestergruppen handelt

3. Polyurethan nach Anspruch 2, **dadurch gekennzeichnet** es sich bei den olefinisch ungesättigten Gruppen um Vinylgruppen handelt.

4. Polyurethan nach einem der Ansprüche 1 bis 3, **dadurch gekennzeichnet, daß** sich die cycloaliphatischen Gruppen von Cycloaliphaten mit 4 bis 12 Kohlenstoffatomen im Molekül und die cycloolefinischen Gruppen von Cycloolefinen mit 4 bis 12 Kohlenstoffatomen im Molekül ableiten.

5. Polyurethan nach Anspruch 4, **dadurch gekennzeichnet, daß** sich die cycloaliphatischen Gruppen von Cyclobutan, Cyclopentan, Cyclohexan, Cycloheptan, Cycloctan, Norboman, Bicyclo[2.2.2]octan, Decalin, Hydroindan, Dicylcopenten, Tricyclodecan oder Adamantan und die cycloolefinischen Gruppen von Cyclopenten, Cyclohexen, Cyclohepten, Cycloocten, Norbornen, Bicyclo[2.2.2]octen oder Dicylclopenten ableiten.

6. Polyurethan nach einem der Ansprüche 1 bis 5, **dadurch gekennzeichnet, daß** es herstellbar ist, indem man
(i) mindestens ein Polyurethanpräpolymer mit mindestens einer freien Isocyanatgruppe im Molekül mit
(ii) mindestens einem Cycloaliphaten mit mindestens einer olefinisch ungesättigten Gruppe und mit mindestens zwei isocyanatreaktiven Gruppen im Molekül und/oder mit
(iii) mindestens einem Cycloolefin mit mindestens zwei isocyanatreaktiven Gruppen im Molekül
umsetzt.

7. Polyurethan nach Anspruch 6, **dadurch gekennzeichnet, daß** die Cycloaliphaten (ii) und/oder Cycloolefine (iii) zwei isocyanatreaktive Gruppen im Molekül enthalten.

8. Polyurethan nach Anspruch 6 oder 7, **dadurch gekennzeichnet, daß** als isocyanatreaktive Gruppen Hydroxyl-, Thiol- und/oder primäre und/oder sekundäre Aminogruppen verwendet werden.

9. Polyurethan nach Anspruch 8, **dadurch gekennzeichnet, daß** Hydroxylgruppen verwendet werden.

10. Polyurethan nach einem der Ansprüche 6 bis 9, **dadurch gekennzeichnet, daß** die Cycloaliphaten (ii) eine olefinisch ungesättigte Gruppe enthalten.

11. Polyurethan nach einem der Ansprüche 6 bis 10, **dadurch gekennzeichnet, daß** als olefinisch ungesättigte Gruppen (Meth)Acrylat-, Ethacrylat-, Crotonat-, Cinnamat-, Vinylether-, Vinylester-, Vinyl-, Dicyclopentadienyl-, Norbornenyl-, Isoprenyl-, Isopropenyl-, Allyl- und/oder Butenylgruppen; Dicyclopentadienyl-, Norbornenyl-, Isoprenyl-, Isopropenyl-, Allyl- oder Butenylethergruppen und/oder Dicyclopentadienyl-, Norbornenyl-, Isoprenyl-, Isopropenyl-, Allyl- und/oder Butenylestergruppen verwendet werden.

12. Polyurethan nach Anspruch 11, **dadurch gekennzeichnet, daß** Vinylgruppen verwendet werden.

13. Polyurethan nach Anspruch 12, **dadurch gekennzeichnet, daß** als Cycloaliphaten (ii) die stellungsisomeren vinylsubstituierten Polyhydroxyderivate von Cyclobutan, Cyclopentan, Cyclohexan, Cycloheptan, Cycloctan, Norbornan, Bicyclo[2.2.2]octan, Decalin, Hydroindan, Dicylcopenten, Tricyclodecan oder Adamantan und als Cycloolefine (iii) die stellungsisomeren Polyhydroxyderivate von Cyclopenten, Cyclohexen, Cyclohepten, Cycloocten, Norbornen, Bicyclo[2.2.2]octen oder Dicylclopenten verwendet werden.

14. Polyurethan nach Anspruch 13, **dadurch gekennzeichnet, daß** die stellungsisomeren Dihydroxyderivate verwendet werden.

15. Polyurethan nach Anspruch 14, **dadurch gekennzeichnet, daß** Vinylcyclohexandiol verwendet wird.

16. Polyurethan nach einem der Ansprüche 1 bis 15, **dadurch gekennzeichnet, daß** das Polyurethanpräpolymer aus mindestens einem Diisocyanat und mindestens einer Verbindung mit zwei isocyanatreaktiven Gruppen hergestellt wird.

17. Pfropfmischpolymerisat, herstellbar, indem man mindestens ein Monomer (a) in der Gegenwart mindestens eines Polyurethans gemäß einem der Ansprüche 1 bis 16 (co)polymerisiert.

18. Die Verwendung der Polyurethane gemäß einem der Ansprüche 1 bis 16 und der Pfropfmischpolymerisate gemäß Anspruch 17 für die Herstellung von Dichtungsmassen, Klebstoffen und Beschichtungsstoffen.

19. Dichtungsmassen, Klebstoffe und Beschichtungsstoffe, **dadurch gekennzeichnet, daß** sie mindestens eines der Polyurethane gemäß einem der Ansprüche 1 bis 16 und/oder mindestens eines der Pfropfmischpolymerisate gemäß Anspruch 17 enthalten.

## Claims

1. Hydrophilic or hydrophobic polyurethane having at least one pendant and/or at least one terminal olefinically unsaturated group, in which
1. the pendant olefinically unsaturated group
1.1 is attached to a cycloaliphatic group which represents a link in the polymer main chain, or
1.2 is present as a double bond in a cycloolefinic group which constitutes a link in the polymer main chain, and
2. the terminal olefinically unsaturated group
2.1 is attached to a cycloaliphatic group which forms, an endgroup of the polymer main chain, or
2.2 is present as a double bond in a cycloolefinic structure which forms an endgroup of the polymer main chain.

2. Polyurethane according to Claim 1, **characterized in that** the olefinically unsaturated groups attached to the cycloaliphatic groups are (meth)acrylate, ethacrylate, crotonate, cinnamate, vinyl ether, vinyl ester, vinyl, dicyclopentadienyl, norbornenyl, isoprenyl, isopropenyl, allyl and/or butenyl groups; dicyclopentadienyl ether, norbornenyl ether, isoprenyl ether, isopropenyl ether, allyl ether or butenyl ether groups; and/or dicyclopentadienyl ester, norbornenyl ester, isoprenyl ester, isopropenyl ester, allyl ester and/or butenyl ester groups.

3. Polyurethane according to Claim 2, **characterized in that** the olefinically unsaturated groups are vinyl groups.

4. Polyurethane according to any of Claims 1 to 3, **characterized in that** the cycloaliphatic groups are derived from cycloaliphatics having 4 to 12 carbon atoms in the molecule and the cycloolefinic groups are derived from cycloolefins having 4 to 12 carbon atoms in the molecule.

5. Polyurethane according to Claim 4, **characterized in that** the cycloaliphatic groups are derived from cyclobutane, cyclopentane, cyclohexane, cycloheptane, cyclooctane, norbornane, bicyclo[2.2.2]octane, decalin, hydroindane, dicyclopentane, tricyclodecane or adamantane and the cycloolefinic groups are derived from cyclopentene, cyclohexene, cycloheptene, cyclooctene, norbornene, bicyclo[2.2.2]octene or dicyclopentene.

6. Polyurethane according to any of Claims 1 to 5, **characterized in that** it is preparable by reacting
(i) at least one polyurethane prepolymer having at least one free isocyanate group in the molecule with
(ii) at least one cycloaliphatic having at least one olefinically unsaturated group and having at least two isocyanate-reactive groups in the molecule, and/or with
(iii)at least one cycloolefin having at least two isocyanate-reactive groups in the molecule.

7. Polyurethane according to Claim 6, **characterized in that** the cycloaliphatics (ii) and/or cycloolefins (iii) contain two isocyanate-reactive groups in the molecule.

8. Polyurethane according to Claim 6 or 7, **characterized in that** isocyanate-reactive groups used comprise hydroxyl, thiol and/or primary and/or secondary amino groups.

9. Polyurethane according to Claim 8, **characterized in that** hydroxyl groups are used.

10. Polyurethane according to any of Claims 6 to 9, **characterized in that** the cycloaliphatics (ii) comprise an olefinically unsaturated group.

11. Polyurethane according to any of Claims 6 to 10, **characterized in that** olefinically unsaturated groups used comprise (meth)acrylate, ethacrylate, crotonate, cinnamate, vinyl ether, vinyl ester, vinyl, dicyclopentadienyl, norbornenyl, isoprenyl, isopropenyl, allyl and/or butenyl groups; dicyclopentadienyl ether, norbornenyl ether, isoprenyl ether, isopropenyl ether, allyl ether or butenyl ether groups; and/or dicyclopentadienyl ester, norbornenyl ester, isoprenyl ester, isopropenyl ester, allyl ester and/or butenyl ester groups.

12. Polyurethane according to Claim 11, **characterized in that** vinyl groups are used.

13. Polyurethane according to Claim 12, **characterized in that** cycloaliphatics (ii) used comprise the positionally isomeric vinyl-substituted polyhydroxy derivatives of cyclobutane, cyclopentane, cyclohexane, cycloheptane, cyclooctane, norbornane, bicyclo[2.2.2]octane, decalin, hydroindane, dicyclopentane, tricyclodecane or adamantane and the cycloolefins (iii) used comprise the positionally isomeric polyhydroxy derivatives of cyclopentene, cyclohexene, cycloheptene, cyclooctene, norbornene, bicyclo[2.2.2]octene or dicyclopentene.

14. Polyurethane according to Claim 13, **characterized in that** the positionally isomeric dihydroxy derivatives are used.

15. Polyurethane according to Claim 14, **characterized in that** vinylcyclohexanediol is used.

16. Polyurethane according to any of Claims 1 to 15, **characterized in that** the polyurethane prepolymer is prepared from at least one diisocyanate and at least one compound having two isocyanate-reactive groups.

17. Graft copolymer preparable by (co)polymerizing at least one monomer (a) in the presence of at least one polyurethane according to any of Claims 1 to 16.

18. Use of a polyurethane according to any of Claims 1 to 16 and/or of a graft copolymer according to Claim 17 to prepare a sealing compound, adhesive, or coating material.

19. Sealing compound, adhesive, or coating material which comprises at least one polyurethane according to any of Claims 1 to 16 and/or at least one graft copolymer according to Claim 17.

## Revendications

1. Polyuréthanne hydrophile ou hydrophobe comportant au moins un groupe latéral et/ou au moins un groupe terminal, oléfiniquement insaturé, dans lequel
1. le groupe oléfiniquement insaturé latéral
1.1 est fixé sur un groupe cycloaliphatique qui représente un terme de la chaîne principale de polymère, ou
1.2 se présente sous la forme d'une double liaison dans un groupe cyclooléfinique qui représente un terme de la chaîne principale de polymère, et
2. le groupe oléfiniquement insaturé terminal
2.1 est fixé sur un groupe cycloaliphatique qui forme un groupe terminal de la chaîne principale de polymère, ou
2.2 se présente sous la forme d'une double liaison dans un groupe cyclooléfinique qui forme un groupe terminal de la chaîne principale de polymère.

2. Polyuréthanne suivant la revendication 1, **caractérisé en ce que**, en ce qui concerne les groupes oléfiniquement insaturés qui sont fixés sur les groupes cycloaliphatiques, il s'agit de groupes (méth)acrylate, éthacrylate, crotonate, cinnamate, éther vinylique, ester vinylique, vinyle, dicyclopentadiényle, norbornényle, isoprényle, isopropényle, allyle et/ou butényle, de groupes dicyclopentadiényle, norbornényle, isoprényle, isopropényle, allyle ou éther buténylique et/ou de groupes dicyclopentadiényle, norbornényle, isoprényle, isopropényle, allyle et/ou ester buténylique.

3. Polyuréthanne suivant la revendication 2, **caractérisé en ce que**, en ce qui concerne les groupes oléfiniquement insaturés, il s'agit de groupes vinyliques.

4. Polyuréthanne suivant l'une des revendications 1 à 3, **caractérisé en ce que** les groupes cycloaliphatiques dérivent de substances cycloaliphatiques comportant 4 à 12 atomes de carbone dans la molécule et les groupes cyclooléfiniques de cyclooléfines comportant 4 à 12 atomes de carbone dans la molécule.

5. Polyuréthanne suivant la revendication 4, **caractérisé en ce que** les groupes cycloaliphatiques dérivent de cyclobutane, de cyclopentane, de cyclohexane, de cycloheptane, de cyclooctane, de norbornane, de bicyclo[2.2.2]octane, de décaline, d'hydroindane, de dicyclopentène, de tricyclodécane ou d'adamantane et les groupes cyclooléfiniques de cyclopentène, de cyclohexène, de cycloheptène, de cyclooctène, de norbornène, de bicyclo[2.2.2]octène ou de dicyclopentène.

6. Polyuréthanne suivant l'une des revendications 1 à 5, **caractérisé en ce qu'**il peut être préparé en faisant réagir
(i) au moins un prépolymère de polyuréthanne comportant au moins un groupe isocyanate libre dans la molécule, avec
(ii) au moins une substance cycloaliphatique comportant au moins un groupe oléfiniquement insaturé et au moins deux groupes réactifs vis-à-vis d'un isocyanate dans la molécule et/ou avec
(iii) au moins une cyclooléfine comportant au moins deux groupes réactifs vis-à-vis d'un isocyanate dans la molécule.

7. Polyuréthanne suivant la revendication 6, **caractérisé en ce que** les substances cycloaliphatiques (ii) et/ou les cyclooléfines (iii) contiennent deux groupes réactifs vis-à-vis d'un isocyanate dans la molécule.

8. Polyuréthanne suivant la revendication 6 ou 7, **caractérisé en ce que**, comme groupes réactifs vis-à-vis d'un isocyanate, on utilise des groupes hydroxyle, thiol et/ou amino primaire et/ou secondaire.

9. Polyuréthanne suivant la revendication 8, **caractérisé en ce qu'**on utilise des groupes hydroxyle.

10. Polyuréthanne suivant l'une des revendications 6 à 9, **caractérisé en ce que** les substances cycloaliphatiques (ii) contiennent un groupe oléfiniquement insaturé.

11. Polyuréthanne suivant l'une des revendications 6 à 10, **caractérisé en ce que**, comme groupes oléfiniquement insaturés, on utilise des groupes (méth)acrylate, éthacrylate, crotonate, cinnamate, éther vinylique, ester vinylique, vinyle, dicyclopentadiényle, norbornényle, isoprényle, isopropényle, allyle et/ou butényle, des groupes dicyclopentadiényle, norbornényle, isoprényle, isopropényle, allyle ou éther buténylique et/ou des groupes dicyclopentadiényle, norbornényle, isoprényle, isopropényle, allyle et/ou ester buténylique.

12. Polyuréthanne suivant la revendication 11, **caractérisé en ce qu'**on utilise des groupes vinyliques.

13. Polyuréthanne suivant la revendication 12, **caractérisé en ce que**, comme substances cycloaliphatiques (ii), on utilise les dérivés polyhydroxy substitués par du vinyle, à isomérie de position, de cyclobutane, de cyclopentane, de cyclohexane, de cycloheptane, de cyclooctane, de norbornane, de bicyclo[2.2.2]octane, de décaline, d'hydroindane, de dicyclopentène, de tricyclodécane ou d'adamantane et, comme cyclooléfines (iii), les dérivés polyhydroxy à isomérie de position de cyclopentène, de cyclohexène, de cycloheptène, de cyclooctène, de norbornène, de bicyclo[2.2.2]octène ou de dicyclopentène.

14. Polyuréthanne suivant la revendication 13, **caractérisé en ce qu'**on utilise les dérivés dihydroxy à isomérie de position.

15. Polyuréthanne suivant la revendication 14, **caractérisé en ce qu'**on utilise du vinylcyclohexanediol.

16. Polyuréthanne suivant l'une des revendications 1 à 15, **caractérisé en ce que** le prépolymère de polyuréthanne est préparé à partir d'au moins un diisocyanate et d'au moins un composé comportant deux groupes réactifs vis-à-vis d'un isocyanate.

17. Copolymère greffé que l'on peut préparer en (co)polymérisant au moins un monomère (a) en présence d'au moins un polyuréthanne suivant l'une des revendications 1 à 16.

18. Utilisation des polyuréthannes suivant l'une des revendications 1 à 16 et du copolymère greffé suivant la revendication 17, pour la préparation de masses d'étanchéité, d'adhésifs et de substances d'enduction.

19. Masses d'étanchéité, adhésifs et substances d'enduction, **caractérisés en ce qu'**ils contiennent au moins un des polyuréthannes suivant l'une des revendications 1 à 16 et/ou au moins un des copolymères greffés suivant la revendication 17.
